(19) Europäisches Patentamt / European Patent Office / Office européen des brevets

(11) **EP 4 615 070 A1**

(12) **EUROPEAN PATENT APPLICATION**
published in accordance with Art. 153(4) EPC

(43) Date of publication:
**10.09.2025 Bulletin 2025/37**

(21) Application number: **22964085.9**

(22) Date of filing: **04.11.2022**

(51) International Patent Classification (IPC):
**H04W 52/24** (2009.01)      **H04W 52/18** (2009.01)

(52) Cooperative Patent Classification (CPC):
**H04W 52/18; H04W 52/24**

(86) International application number:
**PCT/CN2022/130060**

(87) International publication number:
**WO 2024/092781 (10.05.2024 Gazette 2024/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventor: **ZHAO, Zhenshan
Dongguan, Guangdong 523860 (CN)**

(74) Representative: **RGTH
Patentanwälte PartGmbB
Neuer Wall 10
20354 Hamburg (DE)**

(54) **POWER CONTROL METHOD AND TERMINAL DEVICES**

(57)    Provided are a power control method and terminal devices. The method comprises: a terminal device determining the transmit power of a first sidelink signal in a shared spectrum according to one or a plurality of the following: a first transmit power, determined on the basis of a power limit; a second transmit power, determined on the basis of the maximum transmit power of the terminal device; a third transmit power, determined on the basis of a sidelink priority and/or a channel busy ratio; a fourth transmit power, determined on the basis of a downlink loss or the second transmit power; and a fifth transmit power, determined on the basis of the sidelink loss or the second transmit power. The embodiments of the present application introduce the transmit power parameter (i.e. the first transmit power) related to the power limit, and the introduction of the transmit power parameter helps to perform effective power control on unlicensed spectrums or shared spectrums having power limits.

A terminal device determines transmit power of a first sidelink signal — 1410

FIG. 14

## Description

## TECHNICAL FIELD

This application relates to the field of communications technologies, and more specifically, to a power control method and a terminal device.

## BACKGROUND

For some unlicensed spectrums (or shared spectrums), a power limit may be introduced. How to perform power control for sidelink signals in unlicensed spectrum (or shared spectrum) on which a power limit is applied is a problem to be resolved.

## SUMMARY

This application provides a power control method and a terminal device. The following describes the aspects related to this application.

According to a first aspect, there is provided a power control method. The power control method includes: determining, by a terminal device, transmit power of a first sidelink signal in shared spectrum based on one or more of following: first transmit power, determined based on a power limit; second transmit power, determined based on a maximum transmit power of the terminal device; third transmit power, determined based on a sidelink priority and/or a channel busy ratio; fourth transmit power, determined based on a downlink path loss or the second transmit power; or fifth transmit power, determined based on a sidelink path loss or the second transmit power.

According to a second aspect, there is provided a terminal device. The terminal device includes: a determining module, configured to determine transmit power of a first sidelink signal in shared spectrum based on one or more of following: first transmit power, determined based on a power limit; second transmit power, determined based on a maximum transmit power of the terminal device; third transmit power, determined based on a sidelink priority and/or a channel busy ratio; fourth transmit power, determined based on a downlink path loss or the second transmit power; or fifth transmit power, determined based on a sidelink path loss or the second transmit power.

According to a third aspect, a terminal device is provided, and the terminal device includes a transceiver, a memory, and a processor. The memory is configured to store a program, and the processor is configured to: invoke a program in the memory, and control the transceiver to receive or transmit a signal, to cause a terminal device to execute the method according to the first aspect.

According to a fourth aspect, an apparatus is provided. The apparatus includes a processor, configured to invoke a program from a memory to cause the apparatus to execute the method according to the first aspect.

According to a fifth aspect, a chip is provided. The chip includes a processor configured to invoke a program from a memory to cause a device on which the chip is installed to execute the method according to the first aspect.

According to a sixth aspect, a computer-readable storage medium is provided, and the computer-readable storage medium stores a program that causes a computer to execute the method according to the first aspect.

According to a seventh aspect, a computer program product is provided, and the computer program product includes a program that causes a computer to execute the method according to the first aspect.

According to an eighth aspect, a computer program is provided, where the computer program causes a computer to execute the method according to the first aspect.

In embodiments of this application, a transmit power parameter (that is, the first transmit power) related to a power limit is introduced. Introduction of the transmit power parameter facilitates effective power control on unlicensed spectrum or shared spectrum with a power limit.

## BRIEF DESCRIPTION OF DRAWINGS

FIG. 1 is an example diagram of a system architecture of a wireless communications system to which embodiments of this application are applicable.
FIG. 2 is an example diagram of a scenario of sidelink communication within network coverage.
FIG. 3 is an example diagram of a scenario of sidelink communication with partial network coverage.
FIG. 4 is an example diagram of a scenario of sidelink communication outside network coverage.
FIG. 5 is an example diagram of a scenario of sidelink communication based on a central control node.
FIG. 6 is an example diagram of a broadcast-based sidelink communication mode.

FIG. 7 is an example diagram of a unicast-based sidelink communication mode.

FIG. 8 is an example diagram of a multicast-based sidelink communication mode.

FIG. 9A is an example diagram of a slot structure used for a sidelink communications system.

FIG. 9B is another example diagram of a slot structure used for a sidelink communications system.

FIG. 10 is an example diagram of a listen-before-talk (listen before talk, LBT) procedure.

FIG. 11 is an example diagram of an interlace structure.

FIG. 12 is an example diagram of an LBT sub-band structure.

FIG. 13 is an example diagram of a frequency domain relationship between a resource block set and a bandwidth part (bandwidth part, BWP) in a sidelink system.

FIG. 14 is a schematic flowchart of a power control method according to an embodiment of the application.

FIG. 15 is an example diagram of a frequency domain resource occupied by a PSSCH.

FIG. 16 is another example diagram of a frequency domain resource occupied by a PSSCH.

FIG. 17 is a schematic structural diagram of a terminal device according to an embodiment of this application.

FIG. 18 is a schematic structural diagram of an apparatus according to an embodiment of this application.

## DESCRIPTION OF EMBODIMENTS

### Communications system architecture

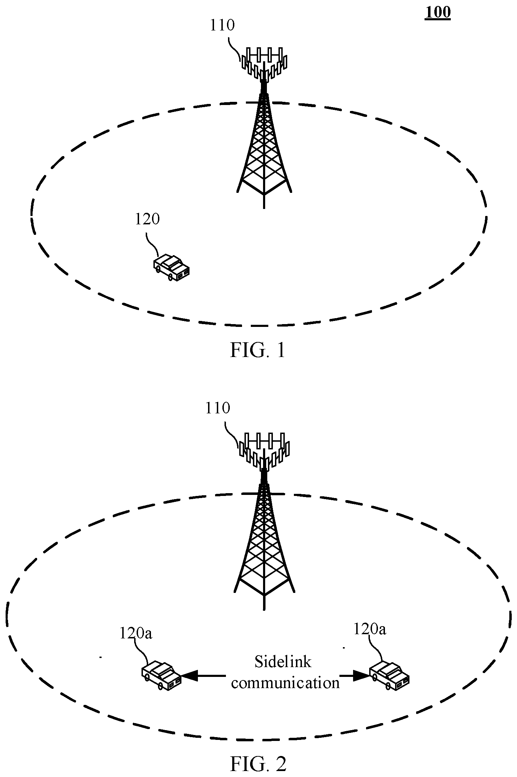

FIG. 1 is an example diagram of a system architecture of a wireless communications system 100 to which an embodiment of this application is applicable. The wireless communications system 100 may include a network device 110 and a terminal device 120. The network device 110 may be a device that communicates with the terminal device 120. The network device 110 may provide communication coverage for a specific geographic area, and may communicate with the terminal device 120 located within the coverage.

FIG. 1 shows one network device and one terminal device as an example. Optionally, the wireless communications system 100 may include one or more network devices 110, and/or one or more terminal devices 120. For a network device 110, the one or more terminal devices 120 may be located within network coverage of the network device 110, or may be located outside network coverage of the network device 110, or may be located partially within the network coverage of the network device 110, and may be located partially outside the network coverage of the network device 110, which is not limited in embodiments of this application.

Optionally, the wireless communications system 100 may further include another network entity such as a network controller or a mobility management entity, which is not limited in embodiments of this application.

It should be understood that the technical solutions in the embodiments of this application may be applied to various communications systems, for example, a fifth generation (5th generation, 5G) system or a new radio (new radio, NR), a long term evolution (long term evolution, LTE) system, an LTE frequency division duplex (frequency division duplex, FDD) system, and an LTE time division duplex (time division duplex, TDD). The technical solutions provided in this application may further be applied to a future communications system, such as a 6th generation mobile communications system or a satellite communications system.

The terminal device in embodiments of this application may also be referred to as user equipment (user equipment, UE), an access terminal, a subscriber unit, a subscriber station, a mobile site, a mobile station (mobile station, MS), a mobile terminal (mobile terminal, MT), a remote station, a remote terminal device, a mobile device, a user terminal, a wireless communications device, a user agent, or a user apparatus. The terminal device in embodiments of this application may be a device providing a user with voice and/or data connectivity and capable of connecting people, objects, and machines, such as a handheld device or a vehicle-mounted device having a wireless connection function. The terminal device in embodiments of this application may be a mobile phone (mobile phone), a tablet computer (Pad), a notebook computer, a palmtop computer, a mobile internet device (mobile internet device, MID), a wearable device, a vehicle, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in smart city (smart city), a wireless terminal in smart home (smart home), or the like. For example, the terminal device may serve as a scheduling entity that provides a sidelink signal between terminal devices in vehicle-to-everything (vehicle-to-everything, V2X), device-to-device (device-to-device, D2D) communications, or the like. For example, a cellular phone and a vehicle communicate with each other through a sidelink signal. A cellular phone and a smart home device communicate with each other, without relaying a communication signal through a base station. Optionally, the terminal device may be configured to serve as a base station.

The network device in embodiments of this application may be a device configured to communicate with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may broadly cover various names in the following, or may be replaced with the following names: a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a primary MeNB, a secondary SeNB, a multi-standard radio (MSR) node, a home base station, a network controller, an access node, a wireless node, an access point (access piont, AP), a transmission node, a transceiver node, a baseband unit (base band unit, BBU), a remote radio unit (Remote Radio Unit, RRU), an active antenna unit (active antenna unit, AAU), a remote radio head (remote radio head, RRH), a central unit (central unit, CU), a distributed unit (distributed unit, DU), a positioning node, or the like. The base station may be a macro base station, a micro base station, a relay node, a donor node, or the like, or a combination thereof. Alternatively, the base station may be a communications module, a modem, or a chip disposed in the device or apparatus described above. Alternatively, the base station may be a mobile switching center, a device that functions as a base station in device-to-device D2D, V2X, or machine-to-machine (machine-to-machine, M2M) communications, a network-side device in a 6G network, a device that functions as a base station in a future communications system, or the like. The base station may support networks of a same access technology or different access technologies. A specific technology and a specific device used by the network device are not limited in embodiments of this application.

The base station may be stationary or mobile. For example, a helicopter or an unmanned aerial vehicle may be configured to function as a mobile base station, and one or more cells may move depending on a location of the mobile base station. In other examples, a helicopter or an unmanned aerial vehicle may be configured to function as a device in communication with another base station.

In some deployments, the network device in embodiments of this application may be a CU or a DU, or the network device includes a CU and a DU. The gNB may further include an AAU.

The network device and the terminal device may be deployed on land, including being indoors or outdoors, handheld, or vehicle-mounted, may be deployed on a water surface, or may be deployed on a plane, a balloon, or a satellite in the air. In embodiments of this application, a scenario of the network device and the terminal device is not limited.

**Sidelink communication in different network coverage statuses**

Sidelink communication means a sidelink-based communication technology. The sidelink communication may be, for example, device to device (device to device, D2D) or vehicle to everything (vehicle to everything, V2X) communication. Communication data in a conventional cellular system is received or transmitted between a terminal device and a network device, while sidelink communication supports direct communication data transmission between terminal devices. Compared with conventional cellular communication, direct transmission of communication data between terminal devices may have higher spectral efficiency and a lower transmission delay. For example, a vehicle-to-everything system uses a sidelink communication technology.

Sidelink communication may be classified, depending on a network coverage status of the terminal device, into sidelink communication within network coverage, sidelink communication with partial network coverage, and sidelink communication outside network coverage.

FIG. 2 is an example diagram of a scenario of sidelink communication within network coverage. In the scenario shown in FIG. 2, both the two terminal devices 120a are located within coverage of the network device 110. Therefore, both the two terminal devices 120a may receive configuration signalling (where the configuration signalling in this application may alternatively be replaced with configuration information) from the network device 110, and determine a sidelink configuration based on the configuration signalling from the network device 110. After performing sidelink configuration, both the two terminal devices 120a may perform sidelink communication on a sidelink.

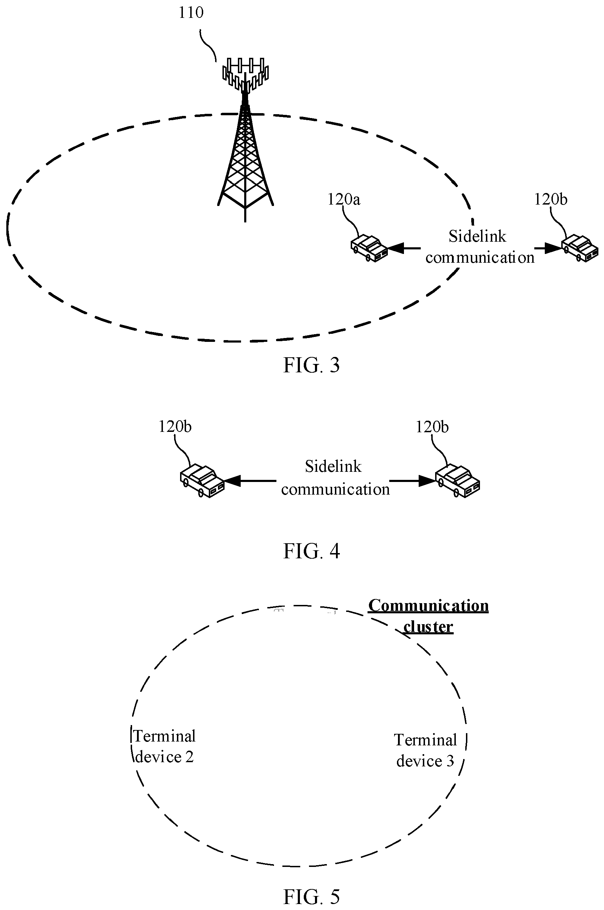

FIG. 3 is an example diagram of a scenario of sidelink communication with partial network coverage. In the scenario shown in FIG. 3, a terminal device 120a performs sidelink communication with a terminal device 120b. The terminal device 120a is located within coverage of a network device 110. Therefore, the terminal device 120a can receive configuration signalling from the network device 110, and determine a sidelink configuration based on the configuration signalling from the network device 110. The terminal device 120b is located outside network coverage, and cannot receive the configuration signalling from the network device 110. In this case, the terminal device 120b may determine a sidelink configuration based on pre-configuration (pre-configuration) information and/or information that is carried on a physical sidelink broadcast channel (physical sidelink broadcast channel, PSBCH) transmitted by the terminal device 120a located within the network coverage. After performing sidelink configuration, both the terminal device 120a and the terminal device 120b may perform sidelink communication on a sidelink.

FIG. 4 is an example diagram of a scenario of sidelink communication outside network coverage. In the scenario shown in FIG. 4, two terminal devices 120b are both located outside network coverage. In this case, both the two terminal devices 120b may determine a sidelink configuration based on pre-configuration information. After performing sidelink configuration, both the two terminal devices 120b may perform sidelink communication on a sidelink.

**Sidelink communication based on a central control node**

FIG. 5 is an example diagram of a scenario of sidelink communication based on a central control node. In the scenario of sidelink communication, a plurality of terminal devices may form a communication cluster, and the communication cluster has a central control node. The central control node may be a terminal device (for example, a terminal device 1 in FIG. 5) in the communication cluster, and the terminal device may also be referred to as a cluster header (cluster header, CH) terminal device. The central control node may be responsible for implementing one or more of the following functions: establishing a communication cluster, adding a cluster member to or deleting a cluster member from a communication cluster, coordinating resources within a communication cluster, allocating sidelink transmission resources to another terminal device, receiving sidelink feedback information from another terminal device, and coordinating resources with another communication cluster.

**Mode of sidelink communication**

Two modes of sidelink communication are defined in some standards or protocols (for example, the 3rd Generation Partnership Project (3rd Generation Partnership Project, 3GPP)): a first mode and a second mode.
In the first mode, a resource (the resource mentioned in this application may also be referred to as a transmission resource, such as a time-frequency resource) of a terminal device is allocated by a network device. The terminal device may transmit data on a sidelink by using the resource allocated by the network device. The network device may allocate, to the terminal device, a resource for single transmission; or may allocate, to the terminal device, a resource for semi-persistent transmission. The first mode may be applied to a scenario in which there is coverage of the network device, for example, the scenario shown in FIG. 2 above. In the scenario shown in FIG. 2, the terminal device 120a is located within the network coverage of the network device 110. Therefore, the network device 110 may allocate, to the terminal device 120a, a resource to be used in a sidelink transmission process.
In the second mode, the terminal device may independently select one or more resources from a resource pool (resource pool, RP). Then, the terminal device may perform sidelink transmission by using the selected resource. For example, in the scenario shown in FIG. 4, the terminal device 120b is located outside the cell coverage. Therefore, the terminal device 120b may independently select a resource from a pre-configured resource pool to perform sidelink transmission. Alternatively, in the scenario shown in FIG. 2, the terminal device 120a may independently select one or more resources from a resource pool configured by the network device 110, to perform sidelink transmission.

**Data transmission modes of sidelink communication**

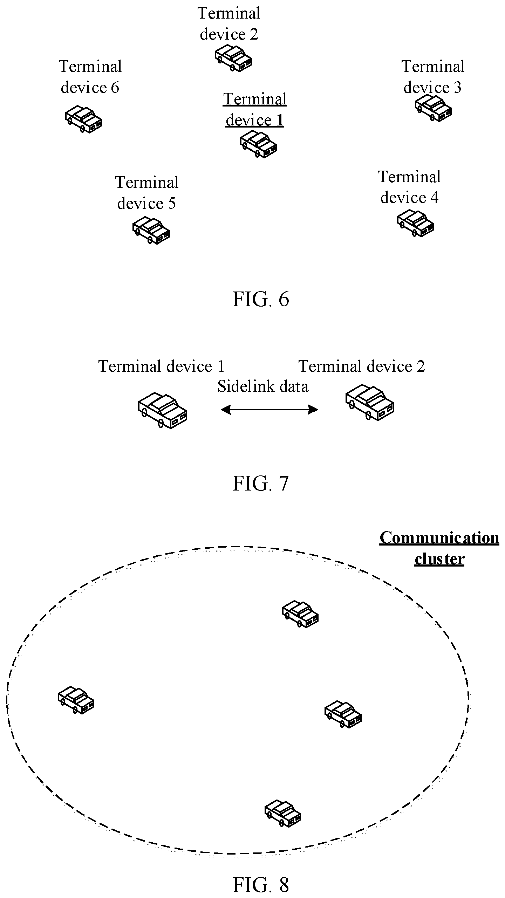

Some sidelink communications systems (such as long term evolution vehicle to everything (long term evolution vehicle to everything, LTE-V2X)) support a broadcast-based data transmission mode (briefly referred to as broadcast transmission below). For the broadcast transmission, a receiving-end terminal may be any terminal device around a transmitting-end terminal. For example, in FIG. 6, a terminal device 1 is a transmitting-end terminal, and a receiving-end terminal corresponding to the transmitting-end terminal is any terminal device around the terminal device 1, for example, may be a terminal device 2 to a terminal device 6 in FIG. 6.
In addition to the broadcast transmission, some communications systems also support a unicast-based data transmission mode (referred to as unicast transmission for short) and/or a multicast-based data transmission mode (referred to as multicast transmission for short). For example, new radio vehicle to everything (new radio vehicle to everything, NR-V2X) expects to support autonomous driving. Autonomous driving poses higher requirements for data interaction between vehicles. For example, data interaction between vehicles requires a higher throughput, a lower delay, higher reliability, larger coverage, a more flexible resource allocation manner, and the like. Therefore, to improve performance of data interaction between vehicles, NR-V2X is introduced with unicast transmission and multicast transmission.
For the unicast transmission, the receiving-end terminal generally includes only one terminal device. For example, in FIG. 7, unicast transmission is performed between a terminal device 1 and a terminal device 2. The terminal device 1 may be a transmitting-end terminal, and the terminal device 2 may be a receiving-end terminal. Alternatively, the terminal device 1 may be a receiving-end terminal, and the terminal device 2 may be a transmitting-end terminal.
For the multicast transmission, the receiving-end terminal may be terminal devices in a communication cluster, or the receiving-end terminal may be terminal devices within a specific transmission distance. For example, in FIG. 8, a terminal device 1, a terminal device 2, a terminal device 3, and a terminal device 4 constitute a communication cluster. If the terminal device 1 transmits data, all the other terminal devices (the terminal device 2 to the terminal device 4) in the cluster may be receiving-end terminals.

**Slot structure for sidelink communication**

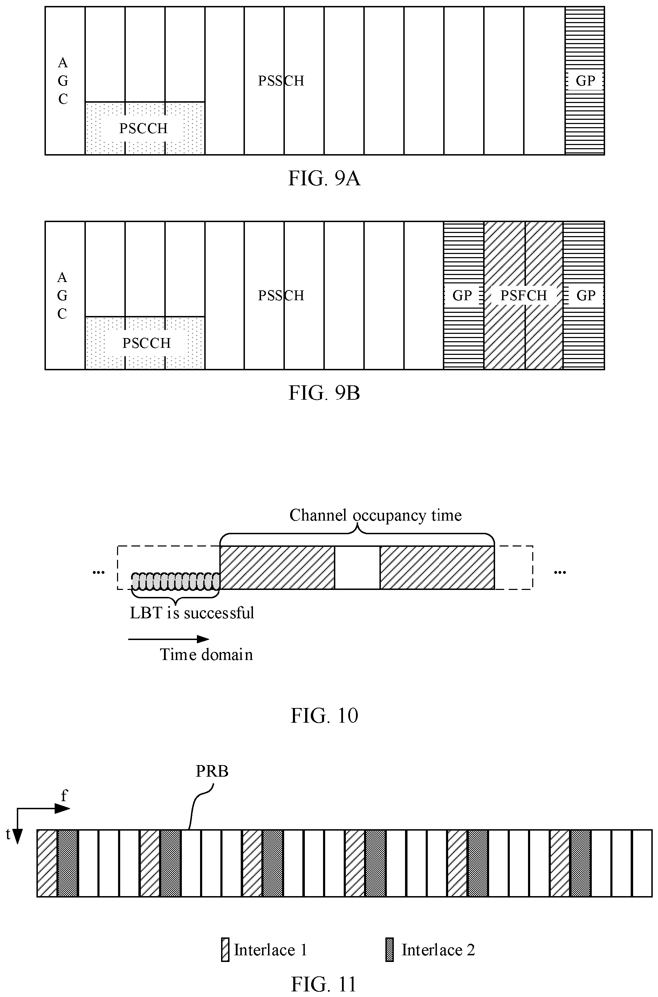

A frame, a subframe, or a slot structure for sidelink communication may be defined in a communications system. In some sidelink communications systems, a plurality of slot structures are defined. For example, in NR-V2X, two slot structures are defined. One of the two slot structures includes no physical sidelink feedback channel (physical sidelink feedback channel, PSFCH), as shown in FIG. 9A; and the other of the two slot structures includes a PSFCH, as shown in FIG. 9B.

The 2nd sidelink symbol in the slot may be used as a start location of a physical sidelink control channel (physical sidelink control channel, PSCCH) in time domain in the NR-V2X, and the PSCCH may occupy two or three symbols in time domain (all the symbols mentioned herein may refer to orthogonal frequency division multiplexing (orthogonal frequency division multiplexing, OFDM) symbols). The PSCCH may occupy a plurality of PRBs in frequency domain. For example, a quantity of PRBs occupied by the PSCCH may be selected from the following values: {10, 12, 15, 20, 25}.

To reduce complexity of blind detection performed by a terminal device on the PSCCH, generally, in one resource pool, only one symbol quantity and one PRB quantity are configured for the PSCCH. In addition, because a sub-channel (sub-channel) is used as a minimum granularity for resource allocation of a physical sidelink shared channel (Physical Sidelink Shared Channel, PSSCH) in NR-V2X, a quantity of PRBs occupied by a PSCCH shall be less than or equal to a quantity of PRBs included in one sub-channel in a resource pool.

Referring to FIG. 9A, for a slot structure that includes no PSFCH, the second sidelink symbol in the slot may be used as a start location of the PSSCH in time domain in the NR-V2X. The last sidelink symbol in the slot is used as a guard period (guard period, GP), and remaining symbols may be mapped to a PSSCH. The first sidelink symbol in the slot may be a repetition of the second sidelink symbol. Generally, a terminal device as a receiving end uses the first sidelink symbol as a symbol for performing automatic gain control (automatic gain control, AGC). Thus, data on the first sidelink symbol is generally not used for data demodulation. The PSSCH may occupy K sub-channels in frequency domain, and each sub-channel may include M consecutive PRBs (values of K and M may be predefined in a protocol, or pre-configured, or configured by a network device, or determined depending on implementation of the terminal device).

FIG. 9B shows a slot structure including a PSFCH, and FIG. 9B schematically shows locations of symbols occupied by the PSFCH, a PSCCH, and a PSSCH in one slot. The slot structure mainly differs from the slot structure in FIG. 9A in that the second-to-last symbol and the third-to-last symbol in the slot are used for transmitting a PSFCH, and in addition, a symbol before the symbol used for transmitting the PSFCH is also used as a GP. It may be learned from the slot structure shown in FIG. 9B that, in one slot, the last symbol is used as a GP, the second-to-last symbol is used for transmitting the PSFCH, and data on the third-to-last symbol is the same as data on the second-to-last symbol used for transmitting the PSFCH, that is, the third-to-last symbol is used as a symbol for performing AGC, and the fourth-to-last symbol has a same function as the last symbol and is also used as a GP. In addition, the first symbol in the slot is used for AGC, data on the symbol is the same as data on the second symbol in the slot. The PSCCH occupies three symbols, and remaining symbols may be used for transmitting the PSSCH.

**Sidelink power control**

An NR SL system supports open-loop control on transmit power of a PSSCH, a PSCCH, a PSFCH, and a sidelink synchronization signal block (sidelink synchronization signal block, S-SSB). For transmission of the PSSCH and the PSCCH in a unicast scenario, three types of power control modes may be supported: power control based only on a downlink path loss, power control based only on a sidelink path loss, and power control based on both a downlink path loss and a sidelink path loss. A specific power control mode actually to be used for the PSSCH and the PSCCH may be determined by higher layer (RRC layer) configuration. For example, if a higher layer configures only a basic operating point $P_{0,SL}$ for power control based on a sidelink path loss, it indicates that power control is performed based only on the sidelink path loss; if the higher layer configures only a basic operating point $P_{0,D}$ for power control based on a downlink path loss, it indicates that power control is performed based only on the downlink path loss; and if the higher layer configures both $P_{0,SL}$ and $P_{0,D}$, it indicates that power control is performed based on the downlink path loss and the sidelink path loss.

For transmission of the PSFCH and the S-SSB, and transmission of the PSSCH and the PSCCH in multicast and broadcast scenarios, since a terminal device serving as a transmitting end acquires no sidelink path loss information, only open-loop power control based on a downlink path loss is supported.

PSSCH/PSCCH power control

Transmit power of a PSSCH on symbols only used for the PSSCH may be determined in the following manner.

If the terminal device operates in the second mode (or referred to as Mode 2) mentioned above, in a case in which a higher layer configures congestion control, transmit power of the PSSCH satisfies the following formula:

$$P_{PSSCH} = \min(P_{\mathrm{CMAX}}, P_{MAX\_CBR}, \min(P_{PSSCH,D}, P_{PSSCH,SL})) \; [\mathrm{dBm}]$$

Otherwise, the transmit power of the PSSCH meets the following formula:

$$P_{PSSCH} = \min(P_{\mathrm{CMAX}}, \min(P_{PSSCH,D}, P_{PSSCH,SL})) \; [\mathrm{dBm}]$$

In the foregoing formula, $P_{\mathrm{CMAX}}$ denotes a configured maximum transmit power, $P_{MAX\_CBR}$ denotes a maximum sidelink transmit power determined based on a transmission priority and a channel busy ratio (channel busy ratio, CBR) level under congestion control configured by the higher layer, and $P_{PSSCH,D}$ and $P_{PSSCH,SL}$ respectively denote transmit power determined based on a downlink path loss and transmit power determined based on a sidelink path loss.

$P_{PSSCH,D}$ and $P_{PSSCH,SL}$ are each determined by using the following formula:

$$P_{\mathrm{PSSCH}.D}(i) = P_{0.D} + 10\log_{10}(2^{\mu} \cdot M_{\mathrm{RB}}^{\mathrm{PSSCH}}) + \alpha_D \cdot PL_D \; [\mathrm{dBm}];$$

and

$$P_{\mathrm{PSSCH},SL}(i) = P_{0,SL} + 10\log_{10}(2^{\mu} \cdot M_{\mathrm{RB}}^{\mathrm{PSSCH}}) + \alpha_{SL} \cdot PL_{SL} \; [\mathrm{dBm}].$$

In the foregoing formula, $P_{0,D}/P_{0,SL}$ denotes a basic transmit power operating point configured by the higher layer for power control that is based on the downlink path loss/sidelink path loss. $\alpha_D/\alpha_{SL}$ denotes a downlink path loss compensation factor/sidelink path loss compensation factor configured by the higher layer. If the higher layer does not configure $\alpha_D/\alpha_{SL}$, a value of $\alpha_D/\alpha_{SL}$ may be 1. $PL_D/PL_{SL}$ denotes a downlink path loss/sidelink path loss estimated by the terminal device, and $M_{\mathrm{RB}}^{\mathrm{PSSCH}}$ denotes a quantity of PRBs occupied by the PSSCH on a symbol that does not carry the PSCCH.

It should be noted that if the higher layer configures only $P_{0,D}$ and does not configure $P_{0,SL}$, power control is performed based only on the downlink path loss. In this case, $\min(P_{PSSCH,D}, P_{PSSCH,SL}) = P_{PSSCH,D}$. If the higher layer configures only $P_{0,SL}$ and does not configure $P_{0,D}$, power control is performed based only on the sidelink path loss. In this case, $\min(P_{PSSCH,D}, P_{PSSCH,SL}) = P_{PSSCH,SL}$. If the higher layer configures $P_{0,SL}$ and $P_{0,D}$, it indicates that power control is performed based on both the downlink path loss and the sidelink path loss.

For a symbol that include both a PSCCH and a PSSCH, the terminal device may distributes total transmit power $P_{PSSCH}$ to the PSCCH and the PSSCH according to a ratio of a quantity of PRBs for the PSCCH to a quantity of PRBs for the PSSCH.

For example, transmit power $P_{PSSCH2}$ of the PSSCH satisfies:

$$P_{PSSCH2} = 10\log_{10}\left(\frac{M_{RB}^{PSSCH} - M_{RB}^{PSCCH}}{M_{RB}^{PSSCH}}\right) + P_{PSSCH} \; [\mathrm{dBm}].$$

In the foregoing formula, $M_{RB}^{PSCCH}$ denotes a quantity of PRBs occupied by the PSCCH.

Correspondingly, transmit power of the PSCCH satisfies:

$$P_{PSCCH} = 10\log_{10}\left(\frac{M_{RB}^{PSCCH}}{M_{RB}^{PSSCH}}\right) + P_{PSSCH} \; [\mathrm{dBm}].$$

PSFCH transmit power

An NR SL system supports power control for a PSFCH based on a downlink path loss, and does not support power control for the PSFCH based on a sidelink path loss. In the NR SL system, a terminal device is allowed to transmit a plurality of PSFCHs in one symbol, and maximum transmit power of the terminal device may be evenly distributed by the plurality of PSFCHs. In addition, in the NR SL system, a maximum quantity of PSFCHs that the terminal device is allowed to transmit simultaneously shall not exceed a maximum quantity $N_{\mathrm{max},PSFCH}$ of PSFCH transmissions configured by a higher layer. The terminal device may determine a quantity $N_{\mathrm{sch,Tx},PSFCH}$ of to-be-transmitted PSFCHs based on a quantity of PSCCHs/PSSCHs requiring sidelink feedback that are received in a plurality of PSSCH slots corresponding to a PSFCH slot. Further, the terminal device may determine, based on $N_{\mathrm{max},PSFCH}$ and $N_{\mathrm{sch,Tx},PSFCH}$, a quantity $N_{\mathrm{Tx},PSFCH}$ of PSFCHs required to be simultaneously transmitted, and determine transmit power of each PSFCH.

An overall principle of determining, by the terminal device, the transmit power of each PSFCH and a quantity $N_{\mathrm{Tx},PSFCH}$ of PSFCHs actually transmitted by the terminal device is as follows: transmit power of each PSFCH is identical and does not exceed $P_{PSFCH,one}$, and total transmit power of $N_{\mathrm{Tx},PSFCH}$ PSFCHs does not exceed the configured maximum transmit power $P_{\mathrm{CMAX}}$. If the total transmit power of the $N_{\mathrm{Tx},PSFCH}$ PSFCHs exceeds $P_{\mathrm{CMAX}}$, the terminal device re-determine a quantity of to-be-transmitted PSFCHs based on priorities of the PSFCHs. However, a quantity of to-be-transmitted PSFCHs determined by the terminal device is not less than a lower limit, such that transmit power of each PSFCH is less than or equal to $P_{PSFCH,one}$.

$P_{PSFCH,one}$ may be determined by using the following formula:

$$P_{PSFCH,one} = P_{\mathrm{O\_PSFCH}} + 10\log_{10}(2^u) + \alpha_{PSFCH} \cdot PL_D \ [\mathrm{dBm}].$$

In the foregoing formula, $P_{\mathrm{O\_PSFCH}}$ denotes a basic PSFCH transmit power operating point configured by the higher layer for power control that is based on the downlink path loss. $\alpha_{PSFCH}$ denotes a downlink path loss compensation factor for PSFCH power control configured based on higher layer signalling. If the higher layer does not configure $\alpha_{PSFCH}$, a value of $\alpha_{PSFCH}$ may be 1. $PL_D$ denotes a downlink path loss estimated by the terminal device.

S-SSB transmit power

An S-SSB may include three signals: a sidelink secondary synchronizaiton signal (sidelink secondary synchronizaiton signal, S-SSS), a sidelink primary synchronizaiton signal (sidelink primary synchronizaiton signal, S-PSS), and a physical sidelink broadcast channel (physical sidelink broadcast channel, PSBCH). Transmit power of the three signals on time-domain symbols corresponding to the three signals is usually identical to avoid AGC problems. Power control for the S-SSB may be performed based on a downlink path loss. When power control is performed for the S-SSB based on the downlink path loss, transmit power of the S-SSB satisfies the following formula:

$$P_{S-SSB} = \min(P_{\mathrm{CMAX}}, P_{0,\mathrm{S\text{-}SSB}} + 10\log_{10}(2^u \cdot M_{RB}^{\mathrm{S\text{-}SSB}}) + \alpha_{\mathrm{S\text{-}SSB}} \cdot PL_D) \ [\mathrm{dBm}].$$

In the foregoing formula, $P_{\mathrm{CMAX}}$ denotes a configured maximum transmit power, and $P_{0,\mathrm{S\text{-}SSB}}$ denotes a basic transmit power operating point configured by the higher layer for power control that is based on the downlink path loss. $\alpha_{\mathrm{S\text{-}SSB}}$ denotes a downlink path loss compensation factor configured based on higher layer signalling. If the higher layer does not configure $\alpha_{\mathrm{S\text{-}SSB}}$, a value of $\alpha_{\mathrm{S\text{-}SSB}}$ may be 1. $PL_D$ denotes a downlink path loss estimated by the terminal device. $M_{RB}^{\mathrm{S\text{-}SSB}}$ denotes a quantity of PRBs occupied by the S-SSB. A value of $M_{RB}^{\mathrm{S\text{-}SSB}}$ is generally 11. If the parameter $P_{0,\mathrm{S\text{-}SSB}}$ is not configured by the higher layer or the terminal device is located outside cell coverage, the terminal device may transmit the S-SSB at a maximum transmit power $P_{\mathrm{CMAX}}$.

**Unlicensed spectrum and channel listening**

An unlicensed spectrum is a spectrum that is specified by a country or a region for communication of a radio device. The spectrum is generally considered as a shared spectrum. In other words, communications devices in a same communications system or different communications systems may use the spectrum provided that a regulatory requirement set for the spectrum specified by the country or the region is met, and there is no need to apply for a dedicated spectrum grant from a government.

To enable various communications devices (or communications systems) that perform wireless communication by using an unlicensed spectrum to coexist on the spectrum, some countries or regions stipulate regulatory requirements to be met for using the unlicensed spectrum. For example, a communications device follows a rule of listen before talk (listen before talk, LBT). The so-called LBT means that a communications device is required to perform channel listening (sensing) first before transmitting a signal on a channel of an unlicensed spectrum. If a channel listening result indicates that the channel is idle, the communications device is allowed to transmit signals by using the channel of the unlicensed spectrum. If a channel listening result indicates that the channel is busy, the communications device is generally not allowed to transmit signals by using the channel of the unlicensed spectrum. To ensure fairness, in one transmission, duration for which the communications device performs signal transmission by using a channel of an unlicensed spectrum cannot exceed a maximum channel occupancy time (maximum channel occupancy time, MCOT). FIG. 10 is an example diagram of a channel occupancy time obtained by a communications device after successful LBT on a channel in unlicensed spectrum and use of resources within the channel occupancy time for signal transmission.

Although channel listening based on LBT is not a global regulation, the channel listening can provide benefits such as avoiding communication and transmission interference between communications systems operating in shared spectrum and enabling friendly coexistence of the communications systems. Therefore, in a design process of an NR system operating in the unlicensed spectrum, channel listening is a feature that communications devices in the system are required to support. From the perspective of network deployment for a system, channel listening includes two mechanisms: one is LBT for load based equipment (load based equipment, LBE), also referred to as dynamic channel listening or dynamic channel occupancy; and the other is LBT for frame based equipment (frame based equipment, FBE), also referred to as semi-persistent channel listening or semi-persistent channel occupancy.

The following mainly introduces several different types of LBT modes (namely, several different types of channel access modes).

An LBT mode of type 1 (Type 1 LBT mode) may also be referred to as multi-slot channel detection with random backoff based on contention window size adjustment. In the Type 1 LBT mode, a communications device may initiate channel occupation of duration $T_{mcot}$ based on a channel access priority p. The following table shows channel access priorities and corresponding parameters used when the terminal device performs the Type 1 LBT mode.

Table 3 Channel access parameters corresponding to different channel priorities

| Channel access priority (p) | $m_p$ | $CW_{min,p}$ | $CW_{max,p}$ | $T_{mcot,p}$ | Allowed $CW_p$ value |
|---|---|---|---|---|---|
| 1 | 2 | 3 | 7 | 2 ms | {3, 7} |
| 2 | 2 | 7 | 15 | 4 ms | {7, 15} |
| 3 | 3 | 15 | 1023 | 6 or 10 ms | {15, 31, 63,127, 255,511, 1023} |
| 4 | 7 | 15 | 1023 | 6 or 10 ms | {15, 31, 63,127, 255,511, 1023} |

In Table 1, $m_p$ denotes a quantity of backoff slots corresponding to the channel access priority p, $CW_p$ denotes a size of a contention window corresponding to the channel access priority p, $CW_{min,p}$ denotes a minimum value for a $CW_p$ value corresponding to the channel access priority p, $CW_{max,p}$ denotes a maximum value of a $CW_p$ value corresponding to the channel access priority p, and $T_{mcot,p}$ denotes duration of maximum channel occupancy time corresponding to the channel access priority p. In the four channel access priorities in Table 1, p=1 denotes the highest priority.

If a network device uses the Type 1 LBT mode, the network device can transmit its own data during the channel occupancy time, and can also share the channel occupancy time (channel occupancy time, COT) with a terminal device. Correspondingly, if the terminal device uses the Type 1 LBT mode, the terminal device can transmit its own data during the channel occupancy time, and can also share the COT with the network device or another terminal device. For resource sharing within the COT, channel access may be performed in the Type 2 LBT mode. An LBT mode of Type 2 (Type 2 LBT mode) may also be referred to as a channel access mode based on a fixed-length channel listening slot. The Type 2 LBT mode includes an LBT mode of Type 2A (Type 2A LBT mode), an LBT mode of Type 2B (Type 2B LBT mode), and an LBT mode of Type 2C (Type 2C LBT mode).

In the Type 2A LBT mode, the communications device may perform channel detection of 25 μs. In other words, the communications device may start channel detection 25 μs prior to the start of data transmission. The channel detection of 25 μs may include channel detection of 16 μs and channel detection of 9 μs. If both detection results indicate that a channel is idle, it may be considered that the channel is idle and channel access can be performed.

In the Type 2B LBT mode, the communications device may perform channel detection of 16 μs. In a channel detection process, if the communications device detects that a channel is idle for at least 5 μs in the 26 μs, and in the last 9 μs, the channel is idle for more than 4 μs, it may be considered that the channel is idle.

In the Type 2C LBT mode, the communications device may transmit data directly through a channel without channel detection. In the Type 2C LBT mode, a time difference between a current transmission and a previous transmission is less than or equal to 16 μs. In other words, if the time difference between two transmissions is less than or equal to 16 μs, the two transmissions may be considered as a same transmission and channel detection is not required. It should be noted that, in the Type 2C LBT mode, transmission duration of the communications device is limited and usually cannot exceed 584 μs.

**Interlace structure**

In an NR-U (NR-based access to Unlicensed spectrum, NR-based access to unlicensed spectrum) system, if a terminal is to perform communication in an unlicensed frequency band, it is stipulated in some regulations that a range of a frequency band occupied by the terminal device is typically required to be greater than or equal to 80% of a system bandwidth. Therefore, to allow more terminal devices to access a channel within a same period of time as much as possible, a resource configuration manner based on an interlace (interlace) is defined in NR-U. An interlace may also be referred to as a comb.

One interlace resource may include N PRBs that are discretely distributed in frequency domain. For example, if a total of M interlace resources are included within a frequency band range, location numbers of PRBs numbered among N PRBs and included in an $m^{th}$ interlace are as follows: {m, M+m, 2M+m, 3M+m, ...}. For example, in FIG. 11, a system bandwidth includes 30 PRBs. The 30 PRBs contain five interlace resources, and each interlace resource includes six PRBs. It may be seen from FIG. 11 that a frequency-domain spacing between any two adjacent PRBs in an interlace is equal, that is, any two adjacent PRBs are spaced five PRBs apart. It should be noted that PRBs included in one interlace resource may also be referred to as interlaced resource blocks (interlaced resource block, IRB). Therefore, the interlace is sometimes directly referred to as IRB.

### Resource block set in an NR-U system

In the NR-U system, due to regulatory requirements on the use of unlicensed spectrum, transmission is typically performed at a granularity of 20 MHz each time. In the design of the NR system, large bandwidth and high throughput transmission is already considered. Therefore, transmission in the NR in unlicensed spectrum should not be limited to a bandwidth of 20 MHz. Therefore, the NR-U is required to support larger bandwidth transmission. The larger bandwidth transmission mentioned herein may refer to transmission at a bandwidth that is a multiple of 20 MHz.

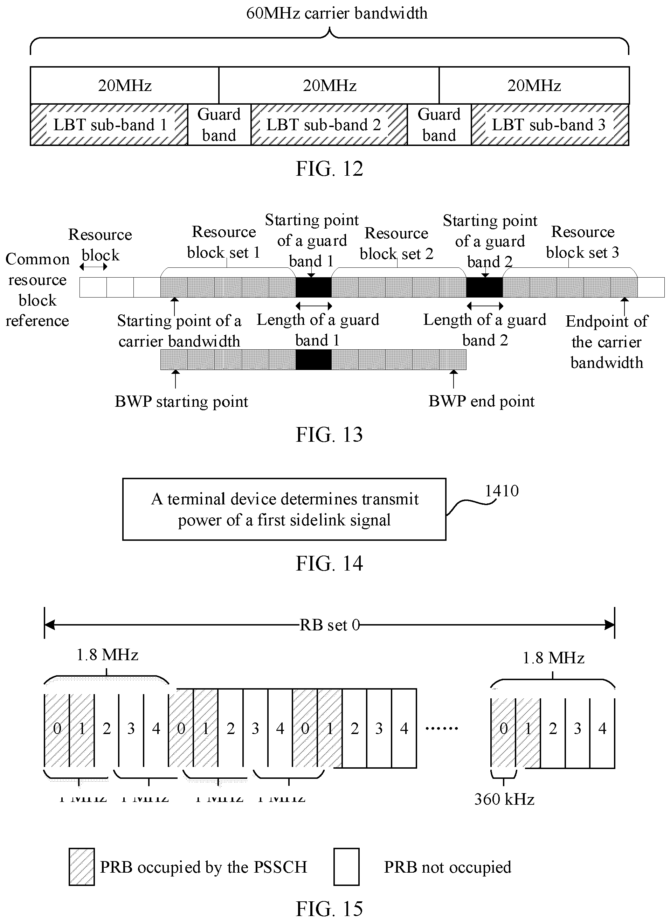

For example, a terminal device may be configured with one or more bandwidth parts (bandwidth part, BWP). The BWP covers a large bandwidth, and generally covers a plurality of 20 MHz channel bandwidths. These 20 MHz bandwidths are referred to as LBT sub-bands in early stage of design of the NR-U, and there is a guard band between sub-bands, as shown in FIG. 12. The purpose of the guard band is to prevent interference between sub-bands caused by out-of-band power leakage (out-of-band power leakage). The interference mentioned here is referred to as inter-sub-band interference. Inter-sub-band interference refers to interference caused to transmission of the terminal device on one sub-band by transmission of another terminal device (or a communications device in another system) on a sub-band adjacent to the one sub-band.

Further, the LBT sub-band is also collectively referred to as a resource block set (resource block set, RB set). A guard band between resource block sets may be configured in a manner shown in FIG. 13. Referring to FIG. 13, the network device may first configure a carrier bandwidth based on a common resource block (common resource block, CRB), and configure one or more guard bands (or referred to as intra-cell guard bands (intra-cell guard band)) in the carrier bandwidth. Configuration of a guard band may include a CRB position at a starting point of the guard band and a length of the guard band. After the configuration of the guard band is completed, the entire carrier bandwidth is divided into a plurality of resource block sets. Then, the network device may map the resource block sets to the BWP by configuring the BWP. It should be noted that it is required in a 3GPP protocol that the BWP configured by the network device includes an integer quantity of resource block sets. In the example shown in FIG. 13, one BWP includes two resource block sets: a resource block set 1 and a resource block set 2.

### Regulatory restrictions on power density and maximum transmit power

In unlicensed spectrum or shared spectrum, to reduce interference between communications devices, a power limit is introduced to communications devices in some regional regulations. For example, in some regional regulations, a limit is imposed on mean equivalent isotropically radiated power (mean equivalent isotropically radiated power) of a communications device, for example, the mean equivalent isotropically radiated power shall not exceed X dBm (decibel-milliwatts). For example, in a frequency band ranging from 5150 to 5350, X = 23. In a frequency band ranging from 5470 to 5725, X = 30. For another example, in some regional regulations, a limit is imposed on mean equivalent isotropically radiated power density (mean equivalent isotropically radiated power density) of a communications device, for example, the mean equivalent isotropically radiated power density shall not exceed Y dBm/MHz (decibel-milliwatts per megahertz). For example, in a frequency band ranging from 5150 to 5350, Y = 10. In a frequency band ranging from 5470 to 5725, Y = 17.

In a case in which a power limit is introduced in unlicensed spectrum or shared spectrum, how to perform power control for sidelink signals transmitted by a terminal device is a problem to be resolved. Embodiments of this application are described in detail below with reference to the accompanying drawings.

FIG. 14 is a schematic flowchart of a power control method according to an embodiment of the application. The method shown in FIG. 14 may be executed by a terminal device. The terminal device may be any type of terminal device mentioned above. For example, the terminal device may be a mobile terminal. Alternatively, the terminal device may be UE.

The terminal device may operate in shared spectrum. The shared spectrum mentioned in the embodiments of this application may also be referred to as unlicensed spectrum. The shared spectrum may be subjected to a power limit.

The power limit may be specified in some regional regulations.

In some implementations, the shared spectrum is subjected to a mean equivalent isotropically radiated power density limit. The mean equivalent isotropically radiated power density limitation may be represented by a parameter Y. A unit of Y may be, for example, dBm/MHz (decibel-milliwatts per megahertz). A value of Y may be determined based on predefined information, pre-configuration information, or network configuration information. The value of Y may be determined based on one or more of the following: a frequency range; whether the terminal device performs power control; whether the terminal device performs power control based on a downlink path loss; or whether the terminal device performs power control based on a sidelink path loss.

For example, for a first frequency range f, if it is configured to perform power control based on both the downlink path loss and the sidelink path loss, the value of Y is $Y_{f,D,SL}$.

For another example, for the first frequency range f, if it is configured to perform power control based on the downlink path loss, the value of Y is $Y_{f,D}$.

For another example, for the first frequency range f, if it is configured to perform power control based on the sidelink path loss, the value of Y is $Y_{F,SL}$.

For another example, for the first frequency range f, if it is configured to not perform power control, the value of Y is $Y_{f,noTPC}$.

For another example, for a frequency band ranging from 5150 to 5350, Y = 10.

For another example, for a frequency band ranging from 5470 to 5725, Y = 17.

In some implementations, the shared spectrum is subjected to a mean equivalent isotropically radiated power limit. The mean equivalent isotropically radiated power limit may be represented by a parameter X. X may be used to impose a limitation on an upper limit of mean equivalent isotropically radiated power of a communications device in shared spectrum. A value of X may be determined based on predefined information, pre-configuration information, or network configuration information. The value of X may be determined based on one or more of the following: a frequency range; whether the terminal device performs power control; whether the terminal device performs power control based on a downlink path loss; or whether the terminal device performs power control based on a sidelink path loss.

For example, for a first frequency range f, if it is configured to perform power control based on both the downlink path loss and the sidelink path loss, the value of X is $X_{f,D,SL}$.

For another example, for the first frequency range f, if it is configured to perform power control based on the downlink path loss, the value of X is $X_{f,D}$.

For another example, for the first frequency range f, if it is configured to perform power control based on the sidelink path loss, the value of X is $X_{f,SL}$.

For another example, for the first frequency range f, if it is configured to not perform power control, the value of X is $X_{f,noTPC}$.

For another example, for a frequency band ranging from 5150 to 5350, X = 23 dBm.

For another example, for a frequency band ranging from 5470 to 5725, X = 30 dBm.

In some implementations, the shared spectrum may be subjected to a plurality of power limits. For example, the shared spectrum is subjected to both a mean equivalent isotropically radiated power density limit and a mean equivalent isotropically radiated power limit.

The terminal device may perform sidelink communication in the shared spectrum. For example, the terminal device may transmit a first sidelink signal in the shared spectrum. The first sidelink signal may include one or more of the following signals: a PSSCH, a PSCCH, an S-SSB, or a PSFCH.

For example, the first sidelink signal includes an S-SSB. The S-SSB may include one or more of the following: an S-PSS, an S-SSS, or a PSBCH. The S-SSB may also be referred to as a sidelink synchronization signal/physical sidelink broadcast channel block, that is, an S-SS/PSBCH block.

The PSFCH may be used to carry one or more of the following types of information: sidelink feedback information or conflict information (conflict information). The sidelink feedback information may be, for example, hybrid automatic repeat request-acknowledgement (hybrid automatic repeat request-acknowledgement, HARQ-ACK) information. The conflict information may be used, for example, to indicate whether there is a resource conflict between sidelink transmissions, or to indicate whether there is a conflict between sidelink transmission resources.

The terminal device may perform power control (for example, open-loop power control) on transmit power of the first sidelink signal. For example, the terminal device may determine the transmit power of the first sidelink signal based on one or more power control parameters (or based on a power control model) (see step S1410 in FIG. 14).

In some implementations, the terminal device may determine the transmit power of the first sidelink signal in the shared spectrum based on a power limit (or a power limitation parameter). The power limit may refer to a power limit corresponding to the shared spectrum (for a detailed description of the power limit, reference is made to the foregoing description). That is, when determining the transmit power of the first sidelink signal, the terminal device may take into consideration the power limit corresponding to the shared spectrum. For example, a new transmit power parameter determined based on the power limit may be introduced into the power control parameter. For another example, one or more transmit power parameters in the power control parameters may be modified or compensated based on the power limit.

In some implementations, the terminal device may determine the transmit power of the first sidelink signal in the shared spectrum based on one or more of the following: first transmit power, second transmit power, third transmit power, fourth transmit power, or fifth transmit power. The first transmit power may be transmit power determined based on a power limit. The second transmit power may be transmit power determined based on a maximum transmit power of the terminal device. The third transmit power may be transmit power determined based on a sidelink priority and/or a channel busy ratio. The fourth transmit power may be transmit power determined based on a downlink path loss or the second transmit power. The fifth transmit power may be transmit power determined based on a sidelink path loss or the second transmit power. For example, the transmit power of the first sidelink signal is determined based on a minimum value of one or more of the following: the first transmit power, the second transmit power, the third transmit power, the fourth transmit power, or the fifth transmit power.

It should be understood that, when the transmit power of the first sidelink signal is determined, all of the first transmit power to the fifth transmit power may be considered, or some of the first transmit power to the fifth transmit power may be considered. Specifically, which transmit power is required to be considered may be determined based on a type of the first sidelink signal and/or configuration by a network device.

For example, if the first sidelink signal is a PSSCH, it is configured by the network device to determine transmit power of the PSSCH based on the downlink path loss, but it is not configured to determine the transmit power of the PSSCH based on the sidelink path loss, then the transmit power of the PSSCH may be determined based on the fourth transmit power. The transmit power of the PSSCH may be determined without considering the fifth transmit power, or the fifth transmit power may be determined in a manner other than using the sidelink path loss.

For another example, if the first sidelink signal is a PSSCH, it is configured by the network device to determine transmit power of the PSSCH based on the sidelink path loss, but it is not configured to determine the transmit power of the PSSCH based on the downlink path loss, the transmit power of the PSSCH may be determined based on the fifth transmit power. The power of the PSSCH may be determined without considering the fourth transmit power, or the fourth transmit power may be determined in a manner other than using the downlink path loss.

For another example, if the first sidelink signal is a PSSCH, and it is configured by the network device to determine transmit power of the PSSCH based on both the downlink path loss and the sidelink path loss, the transmit power of the PSSCH may be determined based on the fourth transmit power and the fifth transmit power, for example, may be determined based on a minimum value of the fourth transmit power and the fifth transmit power.

For another example, if the first sidelink signal is a PSSCH, and it is configured by the network device to determine transmit power of the PSSCH based on the sidelink priority and/or the channel busy ratio, the transmit power of the PSSCH may be determined based on the third transmit power.

For another example, if the first sidelink signal is a PSCCH, transmit power of the PSCCH may be determined based on transmit power of a PSSCH, and the PSSCH may be determined based on configuration by the network device in a manner described in the foregoing examples.

For another example, if the first sidelink signal is an S-SSB, and it is configured by the network device to determine transmit power of the S-SSB based on the downlink path loss, the transmit power of the S-SSB may be determined based on the fourth transmit power.

For another example, if the first sidelink signal is an S-SSB, and it is not configured by the network device to determine transmit power of the S-SSB based on the downlink path loss, the transmit power of the S-SSB may be determined based on the second transmit power.

For another example, if the first sidelink signal is a PSFCH, and it is configured by the network device to determine transmit power of the PSFCH based on the downlink path loss, the transmit power of the S-SSB may be determined based on the fourth transmit power.

For another example, if the first sidelink signal is a PSFCH, and it is not configured by the network device to determine transmit power of the PSFCH based on the downlink path loss, the transmit power of the S-SSB may be determined based on the second transmit power.

For another example, transmit power of the foregoing various types of first sidelink signals may all be determined based on the second transmit power.

For another example, if the shared spectrum is subjected to a power limit, transmit power of the foregoing various types of first sidelink signals may all be determined based on the first transmit power.

The following describes the first transmit power to the fifth transmit power in more detail with reference to specific embodiments.

1. First transmit power

The first transmit power may include sixth transmit power and/or seventh transmit power. The sixth transmit power may be determined based on a mean equivalent isotropically radiated power density limit (or referred to as a mean equivalent isotropically radiated power density limit parameter). The seventh transmit power may be determined based on a mean equivalent isotropically radiated power limit (or referred to as a mean equivalent isotropically radiated power limit parameter).

1.1. Sixth transmit power

In some implementations, the sixth transmit power may be determined based only on a mean equivalent isotropically radiated power density limit.

In some implementations, the sixth transmit power may be determined based on a mean equivalent isotropically radiated power density limit and some other parameters or information. For example, in addition to being determined based on the mean equivalent isotropically radiated power density limit, the sixth transmit power may be determined based on one or more of the following: a frequency domain resource corresponding to the first sidelink signal in a unit frequency range, a quantity of PRBs included in the first sidelink signal, or a subcarrier spacing of a frequency resource corresponding to the first sidelink signal.

In some implementations, the unit frequency range may be any unit frequency range within a frequency domain resource corresponding to the first sidelink signal.

In some implementations, the unit frequency range may correspond to a frequency range of 1 MHz.

In some implementations, the sixth transmit power determined based on the frequency domain resource corresponding to the first sidelink signal in the unit frequency range may include: the sixth transmit power determined based on a maximum value of a frequency domain resource occupied by the first sidelink signal in the unit frequency range.

In some implementations, the quantity of PRBs included in the first sidelink signal may be determined depending on whether an interlace structure is used for the frequency domain resource corresponding to the first sidelink signal.

In some implementations, the subcarrier spacing (sidelink subcarrier spacing) of the frequency resource corresponding to the first sidelink signal may satisfy the following Table 1.

Table 1: sidelink subcarrier spacing

| $\mu$ | $\Delta f = 2^{\mu} \cdot 15$ [kHz] |
|---|---|
| 0 | 15 |
| 1 | 30 |
| 2 | 60 |
| 3 | 120 |

In which, $\Delta f$ denotes the sidelink subcarrier spacing, and $\mu$ denotes a parameter determined based on the sidelink subcarrier spacing. For example, when $\Delta f$ = 15 kHz, a value of $\mu$ is 0.

In some implementations, the sixth transmit power satisfies: $P_6 = f\left(Y, BW, M_{\mathrm{RB}}^{\mathrm{PSSCH}}, N_{RB}^{SC}, \Delta f\right)$ . In the foregoing formula, a unit of $P_6$ may be dBm; $f( )$ may represent a function relationship, and the function relationship may be obtained by theoretical derivation or experimental measurement.

For example, the function relationship may be:

$$P_6 = \mathrm{Y} - 10log_{10}(BW) + 10log_{10}(M_{RB} \cdot N_{RB}^{SC} \cdot \Delta f) \ .$$

For example, the function relationship may be: $P_6 = \mathrm{Y} + 10log_{10}(M_{RB} \cdot N_{RB}^{SC} \cdot \Delta f / BW) \ .$

In which, Y denotes the mean equivalent isotropically radiated power density limit, $BW$ denotes the frequency domain resource corresponding to the first sidelink signal in the unit frequency range, a unit of $BW$ may be hertz (Hz), $M_{RB}$ denotes the quantity of PRBs included in the first sidelink signal, $N_{RB}^{SC}$ denotes the quantity of subcarriers included in one PRB, and $\Delta f$ denotes the subcarrier spacing of the frequency resource corresponding to the first sidelink signal.

1.1.1. Manner of determining the sixth transmit power in a case in which the first sidelink signal is a PSSCH

If the first sidelink signal is a PSSCH, the sixth transmit power may be denoted as $P_{PSSCH,meanDensity}$, and the sixth transmit power satisfies:

$$P_{PSSCH,meanDensity} = f_1\left(\text{Y}, BW_{1M}^{PSSCH}, M_{\text{RB}}^{\text{PSSCH}}, N_{RB}^{SC}, \Delta f\right) \ (1)$$

In the formula (1), Y denotes the mean equivalent isotropically radiated power density limit. The value of Y may be determined based on one or more of the following: a frequency range; whether the terminal device performs power control; whether the terminal device performs power control based on a downlink path loss; or whether the terminal device performs power control based on a sidelink path loss. For example, for a first frequency range f, if it is configured to perform power control based on both the downlink path loss and the sidelink path loss, the value of Y is $Y_{f,D,SL}$. For another example, for the first frequency range $f$, if it is configured to perform power control based on the downlink path loss, the value of Y is $Y_{f,D}$. For another example, for the first frequency range f, if it is configured to perform power control based on the sidelink path loss, the value of Y is $Y_{f,SL}$. For another example, for the first frequency range $f$, if it is configured to not perform power control, the value of Y is $Y_{f,noTPC}$. For another example, for a frequency band ranging from 5150 to 5350, Y = 10. For another example, for a frequency band ranging from 5470 to 5725, Y = 17.

In the formula (1), $BW_{1M}^{PSSCH}$ may be determined based on a maximum value of a frequency domain resource occupied by the PSSCH within a 1 MHz bandwidth. For example, $BW_{1M}^{PSSCH}$ is equal to the maximum value of the frequency domain resource occupied by the PSSCH within the 1 MHz bandwidth. A unit of $BW_{1M}^{PSSCH}$ may be hertz (Hz).

In the formula (1), $M_{\text{RB}}^{\text{PSSCH}}$ denotes a quantity of PRBs included in a frequency domain resource of the PSSCH. In some implementations, the quantity of PRBs included in the frequency domain resource of the PSSCH may be determined based on one or more of the following: a quantity of sub-channels included in the frequency domain resource of the PSSCH, a quantity of PRBs included in one sub-channel, a quantity of interlaces included in one sub-channel, or a quantity of PRBs included in one interlace. The quantity of PRBs included in one sub-channel may be determined based on a maximum value, a minimum value, or an average value of quantities of PRBs included in the sub-channel, or may be a value determined based on pre-configuration information or network configuration information. The quantity of PRBs included in one interlace may be a maximum value, a minimum value, or an average value of quantities of PRBs included in the interlace, or may be a value determined based on pre-configuration information or network configuration information.

In the formula (1), $N_{RB}^{SC}$ denotes a quantity of subcarries included in one PRB, and $N_{RB}^{SC}$ is generally equal to 12.

In the formula (1), $\Delta f$ denotes a subcarrier spacing, which may be determined by referring to the foregoing Table 1.

In the formula (1), $f_1()$ represents a first function relationship, and the first function relationship may be obtained by theoretical derivation or experimental measurement.

In some implementations, the first function relationship may be expressed using the following formula (2-1) or (2-2):

$$P_{PSSCH,meanDensity} = \text{Y} - 10log_{10}(BW_{1M}^{PSSCH}) + 10log_{10}\left(M_{\text{RB}}^{\text{PSSCH}} \cdot N_{RB}^{SC} \cdot \Delta f\right) \ (2\text{-}1);$$

and

$$P_{PSSCH,meanDensity} = \text{Y} + 10log_{10}\left(M_{\text{RB}}^{\text{PSSCH}} \cdot N_{RB}^{SC} \cdot \Delta f / BW_{1M}^{PSSCH}\right) \ (2\text{-}2)$$

If the maximum value of the frequency domain resource occupied by the PSSCH within the 1 MHz bandwidth is $BW_{1M}^{PSSCH}$ Hz, and the mean equivalent isotropically radiated power density limit is Y dBm/MHz, a power limit per Hz for the frequency domain resource occupied by the PSSCH is: $\text{Y} - 10log_{10}(BW_{1M}^{PSSCH})$. If the frequency domain resource of the PSSCH occupies $M_{\text{RB}}^{\text{PSSCH}}$ PRBs, and a corresponding bandwidth is $M_{\text{RB}}^{\text{PSSCH}} \cdot N_{RB}^{SC} \cdot \Delta f$ Hz, the sixth transmit power may be determined according to the formula (2-1) or (2-2).

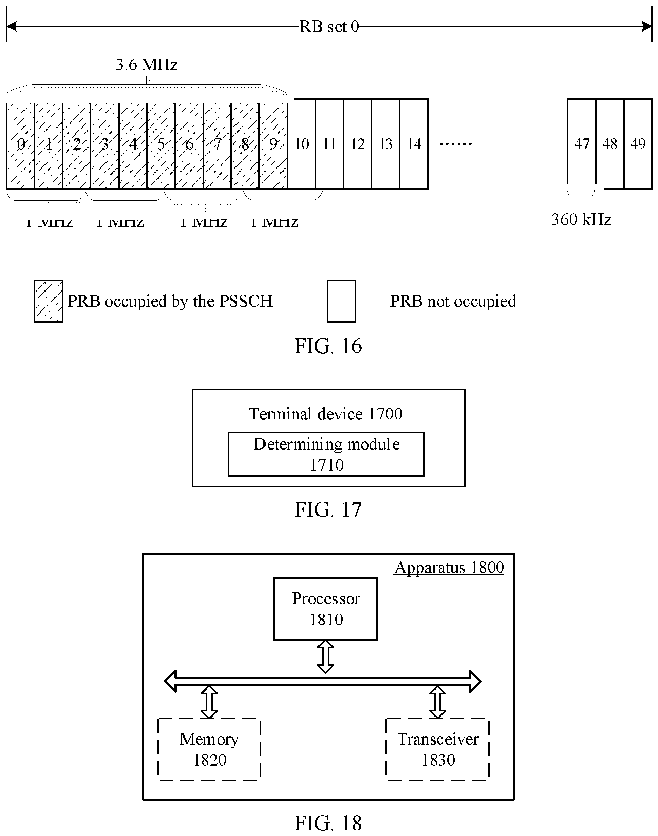

Two more specific examples of the manner of determining the sixth transmit power are provided below with reference to FIG. 15 and FIG. 16 still using the example in which the first sidelink signal is a PSSCH.

For example, as shown in FIG. 15, a resource pool includes one RB set (that is, an RB set 0 in FIG. 15), and one RB set corresponds to a 20 MHz bandwidth. Mean equivalent isotropically radiated power density limit Y = 10 dBm/MHz. In the example shown in FIG. 15, a subcarrier spacing is 30 kHz, and therefore a bandwidth corresponding to one PRB is 360 kHz. In addition, in the example shown in FIG. 15, one RB set includes 5 interlaces, and each interlace includes 10 PRBs within the RB set. Further, in the example shown in FIG. 15, a sub-channel includes one interlace in the RB set. Each block in FIG. 15 represents one PRB, and a number in the block represents an interlace index corlresponding to the PRB. Further, in the example shown in FIG. 15, the frequency domain resource of the PSSCH includes two sub-channels, and the two sub-channels respectively correspond to an interlace 0 and an interlace 1 in the RB set 0. It may be seen from FIG. 15 that the 1 MHz bandwidth includes a maximum of two PRBs of the PSSCH. That is, the PSSCH corresponds to a frequency domain resource of 720 kHz within the 1 MHz bandwidth. Therefore, $BW_{1M}^{PSSCH}$ in the formula (2-1) is equal to $720 \cdot 10^3$. A total quantity of PRBs corresponding to the frequency domain resource of the PSSCH is 20. Therefore, $M_{RB}^{PSSCH}$ in the formula (2-1) is equal to 20. Then, the sixth transmit power may be determined according to the formula (2-1) as follows: $P_{PSSCH,meanDensity} = 10 - 10log_{10}(720 \cdot 10^3) + 10log_{10}(20 \cdot 12 \cdot 2^1 \cdot 15 \cdot 10^3)$. Based on this formula, a value of the sixth transmit power $P_{PSSCH,meanDensity}$ in the scenario shown in FIG. 15 may be calculated to be 20dBm.

For another example, as shown in FIG. 16, a resource pool includes one RB set (that is, an RB set 0 in FIG. 16), and one RB set corresponds to a 20 MHz bandwidth. Mean equivalent isotropically radiated power density limit Y = 10 dBm/MHz. In the example shown in FIG. 16, a subcarrier spacing is 30 kHz, therefore one RB set includes a total of 50 PRBs, and a bandwidth of one PRB is 360 kHz. Further, in the example shown in FIG. 16, one sub-channel includes 10 consecutive PRBs, and therefore, a bandwidth of the one sub-channel is 3.6 MHz. Further, in the example shown in FIG. 16, if the PSSCH occupies one sub-channel, a frequency domain resource corresponding to the PSSCH within the 1 MHz bandwidth is 1 MHz. Therefore, $BW_{1M}^{PSSCH}$ in the formula (2-1) is equal to $10^6$. A total quantity of PRBs corresponding to the frequency domain resource of the PSSCH is 10. Therefore, $M_{RB}^{PSSCH}$ in the formula (2-1) is equal to 10. Then, the sixth transmit power may be determined according to the formula (2-1) as follows: $P_{PSSCH,meanDensity} = 10 - 10log_{10}(10^6) + 10log_{10}(10 \cdot 12 \cdot 2^1 \cdot 15 \cdot 10^3)$. Based on this formula, a value of the sixth transmit power $P_{PSSCH,meanDensity}$ in the scenario shown in FIG. 16 may be calculated to be 15.56 dBm.

1.1.2. Manner of determining the sixth transmit power in a case in which the first sidelink signal is an S-SSB

If the first sidelink signal is an S-SSB, the sixth transmit power may be denoted as $P_{S-SSB,meanDensity}$, and the sixth transmit power satisfies:

$$P_{S-SSB,meanDensity} = f_2(Y, BW_{1M}^{S-SSB}, M_{RB}^{S-SSB}, N_{RB}^{SC}, \Delta f) \quad (3)$$

In the formula (3), Y denotes the mean equivalent isotropically radiated power density limit. The value of Y may be determined based on one or more of the following: a frequency range; whether the terminal device performs power control; or whether the terminal device performs power control based on a downlink path loss. For example, for the first frequency range f, if it is configured to perform power control based on the downlink path loss, the value of Y is $Y_{f,D}$. For another example, for the first frequency range *f*, if it is configured to not perform power control, the value of Y is $Y_{f,noTPC}$. For another example, for a frequency band ranging from 5150 to 5350, Y = 10. For another example, for a frequency band ranging from 5470 to 5725, Y = 17.

In the formula (3), $BW_{1M}^{S-SSB}$ may be determined based on a maximum value of a frequency domain resource corresponding to the S-SSB within a 1 MHz bandwidth. For example, $BW_{1M}^{S-SSB}$ is equal to the maximum value of the frequency domain resource corresponding to the S-SSB within the 1 MHz bandwidth. A unit of $BW_{1M}^{S-SSB}$ may be hertz (Hz). In some implementations, the 1 MHz may be any 1 MHz in a frequency domain range of the S-SSB.

In the formula (3), $M_{RB}^{S-SSB}$ may be determined based on a quantity of PRBs occupied by the S-SSB. For example, $M_{RB}^{S-SSB}$ may be equal to the quantity of PRBs occupied by the S-SSB. For example, a value of $M_{RB}^{S-SSB}$ may be 10, 11, or 12. In some implementations, $M_{RB}^{S-SSB}$ may be determined based on a quantity of PRBs occupied by S-SSBs within one RB set. In some implementations, $M_{RB}^{S-SSB}$ may be determined based on a total quantity of PRBs occupied by S-SSBs within a plurality of RB sets. In some implementations, if K S-SSBs are to be simultaneously transmitted, a value of $M_{RB}^{S-SSB}$ is equal to a product of a quantity of PRBs occupied by each S-SSB and K.

In the formula (3), $N_{RB}^{SC}$ denotes a quantity of subcarries included in one PRB, and $N_{RB}^{SC}$ is generally equal to 12.

In the formula (1), $\Delta f$ denotes a subcarrier spacing, which may be determined by referring to the foregoing Table 1.

In the formula (3), $f_2(\ )$ represents a second function relationship, and the second function relationship may be obtained by theoretical derivation or experimental measurement.

In some implementations, the second function relationship may be expressed using the following formula (4-1) or (4-2):

$$P_{S-SSB,meanDensity} = \text{Y} - 10log_{10}(BW_{1M}^{S-SSB}) + 10log_{10}(M_{\text{RB}}^{S-SSB} \cdot N_{RB}^{SC} \cdot \Delta f) \ (4\text{-}1);$$

and

$$P_{S-SSB,meanDensity} = \text{Y} + 10log_{10}(M_{\text{RB}}^{S-SSB} \cdot N_{RB}^{SC} \cdot \Delta f / BW_{1M}^{S-SSB}) \ (4\text{-}2)$$

If the maximum value of the frequency domain resource occupied by the S-SSB within the 1 MHz bandwidth is $BW_{1M}^{S-SSB}$ Hz, and the mean equivalent isotropically radiated power density limit is Y dBm/MHz, a power limit per Hz for the frequency domain resource occupied by the S-SSB is: $\text{Y} - 10log_{10}(BW_{1M}^{S-SSB})$. If the frequency domain resource of the S-SSB occupies $M_{\text{RB}}^{S-SSB}$ PRBs, and a corresponding bandwidth is $M_{\text{RB}}^{S-SSB} \cdot N_{RB}^{SC} \cdot \Delta f$ Hz, the sixth transmit power may be determined according to the formula (4-1) or (4-2).

1.1.3. Manner of determining the sixth transmit power in a case in which the first sidelink signal is a PSFCH

If the first sidelink signal is a PSFCH, the sixth transmit power may be denoted as $P_{PSFCH,meanDensity}$, and the sixth transmit power satisfies:

$$P_{PSFCH,meanDensity} = f_3(\text{Y}, BW_{1M}^{PSFCH}, M_{\text{RB}}^{PSFCH}, N_{RB}^{SC}, \Delta f) \ (5)$$

In the formula (5), Y denotes the mean equivalent isotropically radiated power density limit. The value of Y may be determined based on one or more of the following: a frequency range; whether the terminal device performs power control; or whether the terminal device performs power control based on a downlink path loss. For example, for the first frequency range f, if it is configured to perform power control based on the downlink path loss, the value of Y is $Y_{f,D}$. For another example, for the first frequency range f, if it is configured to not perform power control, the value of Y is $Y_{f,noTPC}$. For another example, for a frequency band ranging from 5150 to 5350, Y = 10. For another example, for a frequency band ranging from 5470 to 5725, Y = 17.

In the formula (5), $BW_{1M}^{PSFCH}$ may be determined based on a maximum value of a frequency domain resource corresponding to the PSFCH within a 1 MHz bandwidth. For example, $BW_{1M}^{PSFCH}$ may be equal to the maximum value of the frequency domain resource corresponding to the PSFCH within the 1 MHz bandwidth.

Optionally, the 1 MHz may be any 1 MHz in a frequency domain range of the PSFCH.

Optionally, the PSFCH within the 1 MHz bandwidth is PSFCHs included in $N_{\text{sch,Tx},PSFCH}$ PSFCHs. $N_{\text{sch,Tx},PSFCH}$ PSFCHs represent PSFCHs to be transmitted in one transmission opportunity or one transmission slot. $N_{\text{sch,Tx},PSFCH}$ denotes a quantity of the PSFCHs to be transmitted.

Optionally, the PSFCH within the 1 MHz bandwidth is PSFCHs included in $N_{\text{sch,Tx},PSFCH}^{LBT}$ PSFCHs. $N_{\text{sch,Tx},PSFCH}^{LBT}$ PSFCHs represent PSFCHs with successful LBT in the PSFCHs to be transmitted in one transmission opportunity or one transmission slot. $N_{\text{sch,Tx},PSFCH}^{LBT}$ denotes a quantity of the PSFCHs with successful LBT.

Optionally, the PSFCH within the 1 MHz bandwidth is PSFCHs included in $N_{\text{final,Tx,PSFCH}}$ PSFCHs. $N_{\text{final,Tx,PSFCH}}$ PSFCHs represent PSFCHs actually transmitted in one transmission opportunity or one transmission slot. $N_{\text{final,Tx,PSFCH}}$ denotes a quantity of the PSFCHs actually transmitted.

In the formula (5), $M_{\text{RB}}^{PSFCH}$ denotes a quantity of PRBs included in the PSFCH.

Optionally, this parameter represents a quantity of PRBs included in $N_{\text{sch,Tx},PSFCH}$ PSFCHs.

Optionally, this parameter represents a quantity of PRBs included in $N_{\text{sch,Tx},PSFCH}^{LBT}$ PSFCHs.

Optionally, this parameter represents a quantity of PRBs included in $N_{\text{final,Tx,PSFCH}}$ PSFCHs.

In the formula (5), $N_{RB}^{SC}$ denotes a quantity of subcarries included in one PRB, and $N_{RB}^{SC}$ is generally equal to 12.

In the formula (5), $\Delta f$ denotes a subcarrier spacing, which may be determined by referring to the foregoing Table 1.

In the formula (5), $f_3(\ )$ represents a third function relationship, and the third function relationship may be obtained by theoretical derivation or experimental measurement.

In some implementations, the third function relationship may be expressed using the following formula (6-1) or (6-2):

$$P_{PSFCH,meanDensity} = Y - 10log_{10}(BW_{1M}^{PSFCH}) + 10log_{10}(M_{RB}^{PSFCH} \cdot N_{RB}^{SC} \cdot \Delta f) \quad (6\text{-}1);$$

and

$$P_{PSFCH,meanDensity} = Y + 10log_{10}(M_{RB}^{PSFCH} \cdot N_{RB}^{SC} \cdot \Delta f / BW_{1M}^{PSFCH}) \quad (6\text{-}2)$$

If the maximum value of the frequency domain resource occupied by the PSFCH within the 1 MHz bandwidth is $BW_{1M}^{PSFCH}$ Hz, and the mean equivalent isotropically radiated power density limit is Y dBm/MHz, a power limit per Hz for the frequency domain resource occupied by the PSFCH is: $Y - 10log_{10}(BW_{1M}^{PSFCH})$. If the frequency domain resource of the PSFCH occupies $M_{RB}^{PSFCH}$ PRBs, and a corresponding bandwidth is $M_{RB}^{PSFCH} \cdot N_{RB}^{SC} \cdot \Delta f$ Hz, the sixth transmit power may be determined according to the formula (6-1) or (6-2).

1.2. Seventh transmit power

In some implementations, the seventh transmit power is less than or equal to transmit power indicated by the mean equivalent isotropically radiated power limit.

1.2.1. Manner of determining the seventh transmit power in a case in which the first sidelink signal is a PSSCH

If the first sidelink signal is a PSSCH, the seventh transmit power may be denoted as $P_{PSSCH,meanEIRP}$. If the value of the mean equivalent isotropically radiated power limit is X dBm, a value of the seventh transmit power may be set to be not greater than X, that is, less than or equal to X.

A value of X may be a fixed value. Alternatively, the value of X may be determined based on one or more of the following: a frequency range; whether the terminal device performs power control; whether the terminal device performs power control based on a downlink path loss; or whether the terminal device performs power control based on a sidelink path loss.

For example, for a first frequency range f, if it is configured to perform power control based on both the downlink path loss and the sidelink path loss, the value of X is $X_{f,D,SL}$.

For another example, for the first frequency range f, if it is configured to perform power control based on the downlink path loss, the value of X is $X_{f,D}$.

For another example, for the first frequency range f, if it is configured to perform power control based on the sidelink path loss, the value of X is $X_{f,SL}$.

For another example, for the first frequency range f, if it is configured not to perform power control, the value of X is $X_{f,noTPC}$.

For another example, for a frequency band ranging from 5150 to 5350, X = 23 dBm.

For another example, for a frequency band ranging from 5470 to 5725, X = 30 dBm. 1.2.2. Manner of determining the seventh transmit power in a case in which the first sidelink signal is an S-SSB

If the first sidelink signal is an S-SSB, the seventh transmit power may be denoted as $P_{S\text{-}SSB,meanEIRP}$. If the value of the mean equivalent isotropically radiated power limit is X dBm, a value of the seventh transmit power may be set to be not greater than X, that is, less than or equal to X.

A value of X may be a fixed value. Alternatively, the value of X may be determined based on one or more of the following: a frequency range; whether the terminal device performs power control; whether the terminal device performs power control based on a downlink path loss; or whether the terminal device performs power control based on a sidelink path loss.

For example, for the first frequency range f, if it is configured to perform power control based on the downlink path loss, the value of X is $X_{f,D}$.

For another example, for the first frequency range *f,* if it is configured to not perform power control, the value of X is $X_{f,noTPC}$.

For another example, for a frequency band ranging from 5150 to 5350, X = 23 dBm.

For another example, for a frequency band ranging from 5470 to 5725, X = 30 dBm. 1.2.3. Manner of determining the seventh transmit power in a case in which the first sidelink signal is a PSFCH

If the first sidelink signal is a PSFCH, the seventh transmit power may be denoted as $P_{PSFCH,meanEIRP}$. If the value of the mean equivalent isotropically radiated power limit is X dBm, a value of the seventh transmit power may be set to be not greater than X, that is, less than or equal to X.

A value of X may be a fixed value. Alternatively, the value of X may be determined based on one or more of the following: a frequency range; whether the terminal device performs power control; whether the terminal device performs power control based on a downlink path loss; or whether the terminal device performs power control based on a sidelink path loss.

For example, for the first frequency range *f,* if it is configured to perform power control based on the downlink path loss, the value of X is $X_{f,D}$.

For another example, for the first frequency range *f,* if it is configured to not perform power control, the value of X is $X_{f,noTPC}$.

For another example, for a frequency band ranging from 5150 to 5350, X = 23 dBm.

For another example, for a frequency band ranging from 5470 to 5725, X = 30 dBm.

2. Second transmit power

In some implementations, the second transmit power may be denoted as $P_{CMAX}$. If the first sidelink signal is a PSSCH or PSCCH, the second transmit power may alternatively be denoted as $P_{CMAX,PSSCH/PSCCH}$ or $P_{CMAX,PSSCH}$. If the first sidelink signal is an S-SSB, the second transmit power may alternatively be denoted as $P_{CMAX,S-SSB}$. If the first sidelink signal is a PSFCH, the second transmit power may alternatively be denoted as $P_{CMAX,PSFCH}$.

In some implementations, the second transmit power may be determined based on a configured maximum transmit power.

In some implementations, the second transmit power may be determined based on a configured maximum output power (configured maximum output power).

In some implementations, the second transmit power may be determined based on a maximum transmit power.

In some implementations, the second transmit power may be determined based on a maximum output power (maximum output power).

In some implementations, the second transmit power may be determined based on first transmit power.

For example, a range of the second transmit power $P_{CMAX}$ is as follows:

$$P_{CMAX\_L} \leq P_{CMAX} \leq P_{CMAX\_H}$$

$P_{CMAX\_L}$ denotes a lower limit of the second transmit power, and this parameter is determined based on the configured maximum transmit power and/or the first transmit power; and $P_{CMAX\_H}$ denotes an upper limit of the second transmit power, and this parameter is determined based on the configured maximum transmit power and/or the first transmit power. The configured maximum transmit power is determined, for example, based on a parameter *sl-MaxTransPower.*

For example,

$$P_{CMAX\_H} = MIN \{P_{EMAX}, P_{PowerClass}, P_{Regulatory}, P_1\},$$

or

$$P_{CMAX\_H} = MIN \{P_{EMAX}, P_{PowerClass}, P_1\}.$$

$P_{EMAX}$ is determined based on configuration information, for example, determined based on a parameter *sl-MaxTransPower.* $P_{PowerClass}$ is determined based on a maximum transmit power of the terminal device. Optionally, this parameter is determined based on a power class (UE power class) of the terminal device. $P_{Regulatory}$ is determined based on a regulatory power limit. $P_1$ denotes the first transmit power. Optionally, this parameter is determined based on the sixth transmit power and/or the seventh transmit power. Methods for determining the sixth transmit power and the seventh transmit power are described above, and details are not described again.

3. Third transmit power

In some implementations, the third transmit power may be denoted as $P_{MAX\_CBR}$.

In some implementations, the third transmit power may be determined based on a sidelink priority (or a priority of a PSSCH) and/or a CBR. The sidelink priority may be determined based on a priority information field carried in SCI.

In some implementations, the third transmit power may be configured based on a higher layer parameter. The higher layer parameter may be, for example, *sl-MaxTxPower.*

For another example, if the parameter *sl-MaxTxPower* is not configured, the third transmit power may be determined based on the second transmit power. For example, the third transmit power may be equal to the second transmit power, that is, $P_{MAX\_CBR} = P_{CMAX}$.

In some embodiments, whether the first sidelink signal is based on the third transmit power may be determined based on a specific condition. For example, if the terminal device operates in the second mode (or referred to as Mode 2) mentioned above, in a case in which the higher layer configures congestion control for the terminal device, the terminal device may determine the transmit power of the first sidelink signal based on the third transmit power.

In some implementations, if the first sidelink signal is a PSSCH or a PSCCH, the transmit power of the first sidelink signal may be determined based on the third transmit power. For another sidelink signal, such as an S-SSB or a PSFCH, the third transmit power may not be considered.

4. Fourth transmit power

In some implementations, if it is configured to perform power control based on the downlink path loss, the fourth transmit power may be determined based on one or more of the following: a P0 value for power control based on the downlink path loss, the downlink path loss, an $\alpha$ value for power control based on the downlink path loss, a quantity of PRBs occupied by the first sidelink signal, or a parameter determined based on a subcarrier spacing.

The P0 value for power control based on the downlink path loss may represent reference power for the power control based on the downlink path loss. The P0 value for power control based on the downlink path loss may be referred to as a basic transmit power operating point for the power control based on the downlink path loss. The P0 value may be configured based on a higher layer parameter.

The $\alpha$ value for the power control based on the downlink path loss may represent a downlink path loss compensation factor. The $\alpha$ value for the power control based on the downlink path loss may be configured based on a higher layer parameter. If the higher layer parameter is not configured, a value of $\alpha$ may be 1.

The parameter determined based on the subcarrier spacing may refer to the $\mu$ value in the foregoing Table 1.

In some implementations, if it is not configured to perform power control for the PSSCH based on the downlink path loss, the fourth transmit power may be determined based on the second transmit power mentioned above.

4.1. Manner of determining the fourth transmit power in a case in which the first sidelink signal is a PSSCH

In a case in which the first sidelink signal is the PSSCH, the fourth transmit power may be denoted as $P_{PSSCH,D}$.

In some implementations, if it is configured to perform power control for the PSSCH based on the downlink path loss (for example, the parameter *dl-P0-PSSCH-PSCCH* is configured), the fourth transmit power satisfies:

$$P_{\mathrm{PSSCH},D}(i) = P_{0,D} + 10\log_{10}(2^{\mu} \cdot M_{\mathrm{RB}}^{\mathrm{PSSCH}}) + \alpha_D \cdot PL_D \quad (7)$$

In the formula (7), i denotes a transmission opportunity or a transmission slot corresponding to the PSSCH. $P_{PSSCH,D}(i)$ denotes the fourth transmit power.

In the formula (7), $P_{0,D}$ denotes the P0 value for power control based on the downlink path loss. $P_{0,D}$ may be determined based on a higher layer parameter *dl-P0-PSSCH-PSCCH*. $P_{0,D}$ may denote the reference power for the power control based on the downlink path loss. The P0 value for power control based on the downlink path loss may be referred to as a basic transmit power operating point for the power control based on the downlink path loss.

In the formula (7), $\alpha_D$ denotes the $\alpha$ value for power control based on the downlink path loss. $\alpha_D$ may denote a downlink path loss compensation factor. $\alpha_D$ may be determined based on a higher layer parameter *dl-Alpha-PSSCH-PSCCH*. If the parameter *dl-Alpha-PSSCH-PSCCH* is not configured, a value of $\alpha_D$ may be 1.

In the formula (7), $PL_D$ denotes the downlink path loss.

In the formula (7), $M_{\mathrm{RB}}^{\mathrm{PSSCH}}$ denotes a quantity of PRBs occupied by a PSSCH on a symbol including no PSCCH transmission, or denotes a quantity of PRBs corresponding to a frequency domain resource of the PSSCH.

In the formula (7), $\mu$ is determined based on a subcarrier spacing. For details, reference may be made to the foregoing Table 1.

In some implementations, if it is not configured to perform power control based on the downlink path loss (for example, the parameter dl-P0-PSSCH-PSCCH is not configured), the fourth transmit power may be determined based on one or more of the following: the first transmit power (including or may be replaced with the sixth transmit power and/or the seventh transmit power), the second transmit power, or the third transmit power.

For example, if it is not configured to perform power control for the PSSCH based on the downlink path loss (for example, the parameter *dl-P0-PSSCH-PSCCH* is not configured), the fourth transmit power satisfies:

$$P_{\mathrm{PSSCH},D}(i) = \min(P_1, P_{\mathrm{CMAX}}, P_{MAX\_CBR});$$

or

$$P_{\mathrm{PSSCH},D}(i) = \min(P_{\mathrm{CMAX}}, P_{MAX\_CBR});$$

or

$$P_{\mathrm{PSSCH},D}(i) = \min(P_{PSSCH,meanDensity}, P_{PSSCH,meanEIRP}, P_{\mathrm{CMAX}}, P_{MAX\_CBR});$$

or

$$P_{\mathrm{PSSCH},D}(i) = \min(min(P_{PSSCH,meanDensity}, P_{PSSCH,meanEIRP}), P_{\mathrm{CMAX}}, P_{MAX\_CBR});$$

or

$$P_{\mathrm{PSSCH},D}(i) = \min(P_{PSSCH,meanEIRP}, P_{\mathrm{CMAX}}, P_{MAX\_CBR});$$

or

$$P_{\mathrm{PSSCH},D}(i) = \min(P_{PSSCH,meanDensity}, P_{\mathrm{CMAX}}, P_{MAX\_CBR}).$$

In the foregoing formula, $P_1$ denotes the first transmit power, $P_{\mathrm{CMAX}}$ denotes the second transmit power, $P_{MAX\_CBR}$ denotes the third transmit power, $P_{PSSCH,meanDensity}$ denotes the sixth transmit power, and $P_{PSSCH,meanEIRP}$ denotes the seventh transmit power. For details, reference may be made to the foregoing description.

4.2. Manner of determining the fourth transmit power in a case in which the first sidelink signal is an S-SSB

In a case in which the first sidelink signal is an S-SSB, the fourth transmit power may be denoted as $P_{S\text{-}SSB,D}$.

In some implementations, if it is configured to perform power control for the S-SSB based on the downlink path loss (for example, the parameter *dl-P0-PSBCH* is configured), the fourth transmit power satisfies:

$$P_{S-SSB,D} = P_{0,\mathrm{S\text{-}SSB}} + 10\log_{10}(2^u \cdot M_{RB}^{\mathrm{S\text{-}SSB}}) + \alpha_{\mathrm{S\text{-}SSB}} \cdot PL \quad (8)$$

In the formula (8), $P_{S\text{-}SSB,D}$ denotes the fourth transmit power.

In the formula (8), $P_{0,\mathrm{S\text{-}SSB}}$ denotes the P0 value for power control based on the downlink path loss. $P_{0,\mathrm{S\text{-}SSB}}$ may be determined based on a higher layer parameter *dl-P0-PSBCH*. $P_{0,\mathrm{S\text{-}SSB}}$ may denote the reference power for the power control based on the downlink path loss. The P0 value for power control based on the downlink path loss may be referred to as a basic transmit power operating point for the power control based on the downlink path loss.

In the formula (8), $\alpha_{\mathrm{S\text{-}SSB}}$ denotes the $\alpha$ value for power control based on the downlink path loss. $\alpha_{\mathrm{S\text{-}SSB}}$ may denote a downlink path loss compensation factor. $\alpha_D$ may be determined based on a higher layer parameter *dl-Alpha-PSBCH*. If the parameter *dl-Alpha-PSBCH* is not configured, a value of $\alpha_{\mathrm{S\text{-}SSB}}$ may be 1.

In the formula (8), *PL* denotes the downlink path loss.

In the formula (8), $M_{RB}^{\mathrm{S\text{-}SSB}}$ may be determined based on a quantity of PRBs occupied by the S-SSB. For example, $M_{RB}^{\mathrm{S\text{-}SSB}}$ may be equal to the quantity of PRBs occupied by the S-SSB. In some implementations, $M_{\mathrm{RB}}^{S-SSB}$

may be determined based on a quantity of PRBs occupied by S-SSBs within one RB set. In some implementations, $M_{\mathrm{RB}}^{S-SSB}$ may be determined based on a total quantity of PRBs occupied by S-SSBs within a plurality of RB sets. In some implementations, if K S-SSBs are to be simultaneously transmitted, a value of $M_{\mathrm{RB}}^{S-SSB}$ is equal to a product of a quantity of PRBs occupied by each S-SSB and K. Optionally, a quantity of PRBs occupied by each S-SSB is equal to 10, 11, or 12. In the formula (8), $\mu$ is determined based on a subcarrier spacing. For details, reference may be made to the foregoing Table 1.

In some implementations, if it is not configured to perform power control for the S-SSB based on the downlink path loss (for example, the parameter *dl-P0-PSBCH* is not configured), the fourth transmit power may satisfy one of the following:

$$P_{S-SSB,D}(i) = \min(P_1, P_{CMAX});$$

or

$$P_{S-SSB,D} = \min(P_{S-SSB,meanDensity}, P_{S-SSB,meanEIRP}, P_{\mathrm{CMAX}});$$

or

$$P_{S-SSB,D} = \min(P_{S-SSB,meanDensity}, P_{\mathrm{CMAX}});$$

or

$$P_{S-SSB,D} = \min(P_{S-SSB,meanEIRP}, P_{\mathrm{CMAX}});$$

or

$$P_{S-SSB,D} = P_{\mathrm{CMAX}}.$$

In the foregoing formula, $P_1$ denotes the first transmit power, $P_{CMAX}$ denotes the second transmit power, $P_{S-SSB,meanDensity}$ denotes the sixth transmit power, and $P_{S-SSB,meanEIRP}$ denotes the seventh transmit power. For details, reference may be made to the foregoing description.

4.3. Manner of determining the fourth transmit power in a case in which the first sidelink signal is a PSFCH

In a case in which the first sidelink signal is the PSFCH, the fourth transmit power may be denoted as $P_{PSFCH,one}$ or $P_{PSFCH,D}$.

In some implementations, if it is configured to perform power control for the PSFCH based on the downlink path loss (for example, the parameter *dl-P0-PSFCH* is configured), the fourth transmit power satisfies:

$$P_{\mathrm{PSFCH,one}} = P_{O,PSFCH} + 10\, log_{10}\big(2^{\mu} \cdot M_{\mathrm{RB}}^{\mathrm{PSFCH,one}}\big) + \alpha_{PSFCH} \cdot PL \quad (9)$$

In the formula (9), $P_{\mathrm{PSFCH,one}}$ denotes the fourth transmit power.

In the formula (9), $P_{O,PSFCH}$ denotes the P0 value for power control based on the downlink path loss. $P_{O,PSFCH}$ may be determined based on a higher layer parameter *dl-P0-PSFCH*. $P_{O,PSFCH}$ may denote the reference power for the power control based on the downlink path loss. The P0 value for power control based on the downlink path loss may be referred to as a basic transmit power operating point for the power control based on the downlink path loss.

In the formula (9), $\alpha_{PSFCH}$ denotes the $\alpha$ value for power control based on the downlink path loss. $\alpha_{PSFCH}$ may denote a downlink path loss compensation factor. $\alpha_{PSFCH}$ may be determined based on a higher layer parameter *dl-Alpha-PSFCH*. If the parameter *dl-Alpha-PSFCH* is not configured, a value of $\alpha_{PSFCH}$ may be 1.

In the formula (9), *PL* denotes the downlink path loss.

In the formula (9), $M_{\mathrm{RB}}^{\mathrm{PSFCH,one}}$ may be determined based on a quantity of PRBs occupied by one PSFCH.

Optionally, $M_{\mathrm{RB}}^{\mathrm{PSFCH,one}}$ may be determined based on pre-configuration information or network configuration information. For example, a first parameter may be included in the pre-configuration information or network configuration information, and the value of $M_{\mathrm{RB}}^{\mathrm{PSFCH,one}}$ may be determined based on the first parameter.

Optionally, $M_{\mathrm{RB}}^{\mathrm{PSFCH,one}}$ may be determined based on a quantity of PRBs included in one interlace in an RB set. For example, $M_{\mathrm{RB}}^{\mathrm{PSFCH,one}}$ may be equal to a quantity of PRBs included in one interlace in an RB set.

Optionally, $M_{\mathrm{RB}}^{\mathrm{PSFCH,one}}$ may be determined based on an average value of quantities of PRBs included in interlaces in an RB set. For example, $M_{\mathrm{RB}}^{\mathrm{PSFCH,one}}$ may be equal to an average value of quantities of PRBs included in one interlace in an RB set. An average value of quantities of PRBs included in interlaces in an RB set is equal to an average value of quantities of PRBs included in a plurality of interlaces in an RB set.

Optionally, $M_{\mathrm{RB}}^{\mathrm{PSFCH,one}}$ may be determined based on a maximum quantity or a minimum quantity of PRBs included in interlaces in an RB set. For example, $M_{\mathrm{RB}}^{\mathrm{PSFCH,one}}$ may be equal to a maximum quantity of PRBs included in interlaces in an RB set.

Optionally, a value of $M_{\mathrm{RB}}^{\mathrm{PSFCH,one}}$ may be equal to 1, 3, 10, or 11.

5. Fifth transmit power

In some implementations, if it is configured to perform power control based on the sidelink path loss, the fifth transmit power may be determined based on one or more of the following: a P0 value for power control based on the sidelink path loss, the sidelink path loss, an $\alpha$ value for power control based on the sidelink path loss, a quantity of PRBs occupied by the first sidelink signal, or a parameter determined based on a subcarrier spacing.
The P0 value for power control based on the sidelink path loss may represent reference power for the power control based on the sidelink path loss. The P0 value may be configured based on a higher layer parameter. The P0 value for power control based on the sidelink path loss may be referred to as a basic transmit power operating point for the power control based on the sidelink path loss.
The $\alpha$ value for the power control based on the sidelink path loss may represent a sidelink path loss compensation factor. The $\alpha$ value for the power control based on the sidelink path loss may be configured based on a higher layer parameter. If the higher layer parameter is not configured, a value of $\alpha$ may be 1.
The parameter determined based on the subcarrier spacing may refer to the $\mu$ value in the foregoing Table 1.
In some implementations, if it is not configured to perform power control for the PSSCH based on the downlink path loss, the fifth transmit power may be determined based on the second transmit power mentioned above.

5.1. Manner of determining the fifth transmit power in a case in which the first sidelink signal is a PSSCH

In a case in which the first sidelink signal is the PSSCH, the fifth transmit power may be denoted as $P_{PSSCH,SL}$.
In some implementations, if it is configured to perform power control for the PSSCH based on the sidelink path loss (for example, the higher layer parameter *sl-P0-PSSCH-PSCCH* is configured), the fifth transmit power satisfies:

$$P_{\mathrm{PSSCH},SL}(i){=}P_{0,SL} + 10\log_{10}(2^{\mu} \cdot M_{\mathrm{RB}}^{\mathrm{PSSCH}}) + \alpha_{SL} \cdot PL_{SL} \quad (10)$$

In the formula (10), i denotes a transmission opportunity or a transmission slot corresponding to the PSSCH. $P_{PSSCH,SL}(i)$ denotes the fifth transmit power.
In the formula (10), $P_{0,SL}$ denotes the P0 value for power control based on the sidelink path loss. $P_{0,SL}$ may be determined based on a higher layer parameter *sl-P0-PSSCH-PSCCH*.
In the formula (10), $\alpha_{SL}$ denotes the $\alpha$ value for power control based on the sidelink path loss. $\alpha_{SL}$ may denote a sidelink path loss compensation factor. $\alpha_{SL}$ may be determined based on a higher layer parameter *sl-Alpha-PSSCH-PSCCH*. If the parameter *sl-Alpha-PSSCH-PSCCH* is not configured, a value of $\alpha_{SL}$ may be 1.
In the formula (10), $PL_{SL}$ denotes the sidelink path loss.
Optionally, $PL_{SL}$ may satisfy the following formula (11):

$$PL_{SL} = referenceSignalPower - higher\ layer\ filtered\ RSRP \quad (11)$$

In which, *referenceSignalPower* may be determined based on transmit power of the PSSCH (the transmit power may be a reference value, and may be specifically configured by a network device or pre-configured, or may be determined based on transmit power of a PSSCH previously transmitted by the terminal device); and *higher layer filtered RSRP* may be determined based on reference signal received power (reference signal receiving power, RSRP) reported by a receiving end.

In the formula (10), $M_{\text{RB}}^{\text{PSSCH}}$ denotes a quantity of PRBs occupied by a PSSCH on a symbol including no a PSCCH, or denotes a quantity of PRBs corresponding to a frequency domain resource of the PSSCH.

In the formula (10), $\mu$ is determined based on a subcarrier spacing. For details, reference may be made to the foregoing Table 1.

In some implementations, if it is not configured to perform power control based on the sidelink path loss (for example, the parameter *sl-P0-PSSCH-PSCCH* is not configured), the fifth transmit power may be determined based on one or more of the following: the first transmit power (including the sixth transmit power and/or the fourth transmit power), the second transmit power, the third transmit power, or the fourth transmit power.

For example, if it is not configured to perform power control for the PSSCH based on the sidelink path loss (for example, the parameter *sl-P0-PSSCH-PSCCH* is not configured), the fifth transmit power satisfies:

$$P_{\text{PSSCH},SL}(i) = \min(P_1, P_{\text{CMAX}}, P_{MAX\_CBR});$$

or

$$P_{\text{PSSCH},SL}(i) = \min(P_1, P_{\text{CMAX}}, P_{\text{PSSCH},D}(i));$$

or

$$P_{\text{PSSCH},SL}(i) = \min\left(P_{\text{CMAX}}, P_{\text{PSSCH},D}(i)\right);$$

or

$$P_{\text{PSSCH},SL}(i) = \min\left(P_{PSSCH,meanDensity}, P_{PSSCH,meanEIRP}, P_{\text{CMAX}}, P_{\text{PSSCH},D}(i)\right);$$

or

$$P_{\text{PSSCH},SL}(i) = \min\left(\min\left(P_{PSSCH,meanDensity}, P_{PSSCH,meanEIRP}\right), P_{\text{CMAX}}, P_{\text{PSSCH},D}(i)\right);$$

or

$$P_{\text{PSSCH},SL}(i) = \min\left(P_{PSSCH,meanEIRP}, P_{\text{CMAX}}, P_{\text{PSSCH},D}(i)\right);$$

or

$$P_{\text{PSSCH},SL}(i) = \min\left(P_{PSSCH,meanDensity}, P_{\text{CMAX}}, P_{\text{PSSCH},D}(i)\right);$$

or

$$P_{\text{PSSCH},SL}(i) = \min\left(P_{\text{CMAX}}, P_{MAX\_CBR}\right);$$

or

$$P_{\text{PSSCH},SL}(i) = \min\left(P_{PSSCH,meanDensity}, P_{PSSCH,meanEIRP}, P_{\text{CMAX}}, P_{MAX\_CBR}\right);$$

or

$$P_{\text{PSSCH,SL}}(i) = min\left(min\left(P_{PSSCH,meanDensity}, P_{PSSCH,meanEIRP}\right), P_{\text{CMAX}}, P_{MAX\_CBR}\right);$$

or

$$P_{\text{PSSCH,SL}}(i) = min\left(P_{PSSCH,meanEIRP}, P_{\text{CMAX}}, P_{MAX\_CBR}\right);$$

or

$$P_{\text{PSSCH,SL}}(i) = min\left(P_{PSSCH,meanDensity}, P_{\text{CMAX}}, P_{MAX\_CBR}\right).$$

In the foregoing formula, $P_1$ denotes the first transmit power, $P_{\text{CMAX}}$ denotes the second transmit power, $P_{MAX\_CBR}$ denotes the third transmit power, $P_{PSSCH,D}(i)$ denotes the fourth transmit power, $P_{PSSCH,meanDensity}$ denotes the sixth transmit power, and $P_{PSSCH,meanEIRP}$ denotes the seventh transmit power. For details, reference may be made to the foregoing description.

The first transmit power to the fifth transmit power are described in detail above. The following describes in detail how to determine the transmit power of the first sidelink signal based on some or all of the first transmit power to the fifth transmit power by using different types of first sidelink signals as examples.

Embodiment 1: Manner of determining transmit power of a PSSCH

In some implementations, the transmit power of the PSSCH in the symbol including no PSCCH transmission may be determined based on one or more of the following: the first transmit power, the second transmit power, the third transmit power, the fourth transmit power, or the fifth transmit power.

In some implementations, the transmit power of the PSSCH on the symbol including no PSCCH transmission satisfies:

$$P_{PSSCH}(i) = min\left(P_1, P_{\text{CMAX}}, P_{MAX\_CBR}, min\left(P_{PSSCH,D}(i), P_{PSSCH,SL}(i)\right)\right)$$

In which, i denotes a transmission opportunity corresponding to the PSSCH, $P_{PSSCH}(i)$ denotes the transmit power of the PSSCH on the symbol including no PSCCH transmission, $P_1$ denotes the first transmit power, $P_{\text{CMAX}}$ denotes the second transmit power, $P_{MAX\_CBR}$ denotes the third transmit power, $P_{PSSCH,D}(i)$ denotes the fourth transmit power, and $P_{PSSCH,SL}(i)$ denotes the fifth transmit power.

In some implementations, the transmit power of the PSSCH on the symbol including no PSCCH transmission satisfies:

$$P_{PSSCH}(i) = $$
$$min\left(P_{PSSCH,meanDensity}, P_{PSSCH,meanEIRP}, P_{\text{CMAX}}, P_{MAX_{CBR}}, min\left(P_{PSSCH,D}(i), P_{PSSCH,SL}(i)\right)\right)$$

$$(11)$$

In which, i denotes a transmission opportunity corresponding to the PSSCH, $P_{PSSCH}(i)$ denotes the transmit power of the PSSCH on the symbol including no PSCCH transmission, $P_{\text{CMAX}}$ denotes the second transmit power, $P_{MAX\_CBR}$ denotes the third transmit power, $P_{PSSCH,D}(i)$ denotes the fourth transmit power, $P_{PSSCH,SL}(i)$ denotes the fifth transmit power, $P_{PSSCH,meanDensity}$ denotes the sixth transmit power, and $P_{PSSCH,meanEIRP}$ denotes the seventh transmit power.

In some implementations, the transmit power of the PSSCH on the symbol including no PSCCH transmission satisfies:

$$P_{PSSCH}(i) = min(P_{PSSCH,meanDensity}, P_{\text{CMAX}}, P_{MAX\_CBR}, min(P_{PSSCH,D}(i), P_{PSSCH,SL}(i)))$$

$$(12)$$

In which, i denotes a transmission opportunity corresponding to the PSSCH, $P_{PSSCH}(i)$ denotes the transmit power of the PSSCH on the symbol including no PSCCH transmission, $P_{CMAX}$ denotes the second transmit power, $P_{MAX\_CBR}$ denotes the third transmit power, $P_{PSSCH,D}(i)$ denotes the fourth transmit power, $P_{PSSCH,SL}(i)$ denotes the fifth transmit power, and $P_{PSSCH,meanDensity}$ denotes the sixth transmit power.

In some implementations, the transmit power of the PSSCH on the symbol including no PSCCH transmission satisfies:

$$P_{PSSCH}(i) = \min(P_{PSSCH,meanEIRP}, P_{CMAX}, P_{MAX\_CBR}, \min(P_{PSSCH,D}(i), P_{PSSCH,SL}(i)))\ \ (13)$$

In which, $i$ denotes a transmission opportunity corresponding to the PSSCH, $P_{PSSCH}(i)$ denotes the transmit power of the PSSCH on the symbol including no PSCCH transmission, $P_{CMAX}$ denotes the second transmit power, $P_{MAX\_CBR}$ denotes the third transmit power, $P_{PSSCH,D}(i)$ denotes the fourth transmit power, $P_{PSSCH,SL}(i)$ denotes the fifth transmit power, and $P_{PSSCH,meanEIRP}$ denotes the seventh transmit power.

In some implementations, the transmit power of the PSSCH on the symbol including no PSCCH transmission satisfies:

$$P_{PSSCH}(i) =$$
$$\min(P_{CMAX}, P_{MAX\_CBR}, \min(P_{PSSCH,meanDensity}, P_{PSSCH,meanEIRP}, P_{PSSCH,D}(i), P_{PSSCH,SL}(i)))$$

$$(14)$$

In which, i denotes a transmission opportunity corresponding to the PSSCH, $P_{PSSCH}(i)$ denotes the transmit power of the PSSCH on the symbol including no PSCCH transmission, $P_{CMAX}$ denotes the second transmit power, $P_{MAX\_CBR}$ denotes the third transmit power, $P_{PSSCH,D}(i)$ denotes the fourth transmit power, $P_{PSSCH,SL}(i)$ denotes the fifth transmit power, $P_{PSSCH,meanDensity}$ denotes the sixth transmit power, and $P_{PSSCH,meanEIRP}$ denotes the seventh transmit power.

In some implementations, the transmit power of the PSSCH on the symbol including no PSCCH transmission satisfies:

$$P_{PSSCH}(i) = \min(P_{CMAX}, P_{MAX\_CBR}, \min(P_{PSSCH,meanDensity}, P_{PSSCH,D}(i), P_{PSSCH,SL}(i)))$$

$$(15)$$

In which, $i$ denotes a transmission opportunity corresponding to the PSSCH, $P_{PSSCH}(i)$ denotes the transmit power of the PSSCH on the symbol including no PSCCH transmission, $P_{CMAX}$ denotes the second transmit power, $P_{MAX\_CBR}$ denotes the third transmit power, $P_{PSSCH,D}(i)$ denotes the fourth transmit power, $P_{PSSCH,SL}(i)$ denotes the fifth transmit power, and $P_{PSSCH,meanDensity}$ denotes the sixth transmit power.

In some implementations, the transmit power of the PSSCH on the symbol including no PSCCH transmission satisfies:

$$P_{PSSCH}(i) = \min(P_{CMAX}, P_{MAX\_CBR}, \min(P_{PSSCH,meanEIRP}, P_{PSSCH,D}(i), P_{PSSCH,SL}(i)))\ \ (16)$$

In which, $i$ denotes a transmission opportunity corresponding to the PSSCH, $P_{PSSCH}(i)$ denotes the transmit power of the PSSCH on the symbol including no PSCCH transmission, $P_{CMAX}$ denotes the second transmit power, $P_{MAX\_CBR}$ denotes the third transmit power, $P_{PSSCH,D}(i)$ denotes the fourth transmit power, $P_{PSSCH,SL}(i)$ denotes the fifth transmit power, and $P_{PSSCH,meanEIRP}$ denotes the seventh transmit power.

In some implementations, the transmit power of the PSSCH on a symbol including PSCCH transmission may be determined based on one or more of the following: the first transmit power, the second transmit power, the third transmit power, the fourth transmit power, the fifth transmit power, a quantity of PRBs included in the PSSCH, or a quantity of PRBs included in the PSCCH.

For example, the transmit power of the PSSCH on the symbol including PSCCH transmission satisfies:

$$P_{PSSCH2}(i) = 10\log_{10}(\frac{M_{RB}^{PSSCH} - M_{RB}^{PSCCH}}{M_{RB}^{PSSCH}}) + P_{PSSCH}(i)\ \ (17)$$

In which, $i$ denotes a transmission opportunity corresponding to the PSSCH, $P_{PSSCH2}(i)$ denotes the transmit power of the PSSCH on the symbol including PSCCH transmission, $P_{PSSCH}(i)$ denotes the transmit power of the PSSCH on the symbol including no PSCCH transmission, $M_{RB}^{PSCCH}$ denotes a quantity of PRBs occupied by the PSCCH, and $M_{\mathrm{RB}}^{\mathrm{PSSCH}}$ denotes a quantity of PRBs occupied by the PSSCH on the symbol including no PSCCH transmission.

Embodiment 2: Manner of determining transmit power of a PSCCH

In some implementations, if the first sidelink signal is a PSCCH, transmit power of the PSCCH satisfies:

$$P_{PSCCH}(i) = 10\log_{10}(\frac{M_{RB}^{PSCCH}}{M_{RB}^{PSSCH}}) + P_{PSSCH}(i) \quad (18)$$

In which, $i$ denotes a transmission opportunity corresponding to the PSCCH, $P_{PSCCH}(i)$ denotes the transmit power of the PSCCH, $P_{PSSCH}(i)$ denotes transmit power of a PSSCH on a symbol including no PSCCH transmission, $M_{RB}^{PSCCH}$ denotes a quantity of PRBs occupied by the PSCCH, and $M_{\mathrm{RB}}^{\mathrm{PSSCH}}$ denotes a quantity of PRBs occupied by the PSSCH on the symbol including no PSCCH transmission. For a manner of determining $P_{PSSCH}(i)$, reference may be made to the previous embodiment.

In some implementations, in a PSCCH/PSSCH slot, transmit power for all PSCCH/PSSCH time domain symbols is equal.

Embodiment 3: Manner of determining transmit power of an S-SSB

In some implementations, the transmit power of the S-SSB may be determined based on one or more of the following: the first transmit power (may include or may be replaced with the sixth transmit power and/or the seventh transmit power), the second transmit power, or the fourth transmit power.

In some implementations, the transmit power of the S-SSB may be determined based on the first transmit power, the second transmit power, and the fourth transmit power. For example, the transmit power of the S-SSB may be determined based on a minimum value of the first transmit power, the second transmit power, and the fourth transmit power. In an example, the transmit power of the S-SSB may be equal to a minimum value of the first transmit power, the second transmit power, and the fourth transmit power.

In some implementations, the transmit power of the S-SSB may be determined based on the first transmit power and the second transmit power. For example, the transmit power of the S-SSB may be determined based on a minimum value of the first transmit power and the second transmit power. In an example, the transmit power of the S-SSB may be equal to a minimum value of the first transmit power and the second transmit power.

In some implementations, in a slot for transmitting an S-SSB, transmit power on all S-SSB time domain symbols is equal.

In some implementations, a manner of determining the transmit power of the S-SSB may be determined depending on whether it is configured to perform power control based on the downlink path loss (for example, whether the parameter *dl-P0-PSBCH* is configured). The following provides two different embodiments.

Embodiment 3.1:

In Embodiment 3.1, regardless of whether it is configured to perform power control based on the downlink path loss (for example, regardless of whether the parameter *dl-P0-PSBCH* is configured), the terminal device determines the transmit power of the S-SSB based on the fourth transmit power.

For example, the transmit power of the S-SSB satisfies:

$$P_{S-SSB}(i) = \min(P_1, P_{CMAX}, P_{S-SSB,D}(i)) \quad (19)$$

In which, $i$ denotes a transmission opportunity corresponding to the S-SSB, $P_{S-SSB}(i)$ denotes the transmit power of the S-SSB, $P_1$ denotes the first transmit power, $P_{CMAX}$ denotes the second transmit power, and $P_{S-SSB,D}(i)$ denotes the fourth transmit power.

For another example, the transmit power of the S-SSB satisfies:

$$P_{S-SSB}(i) = \min(P_{S-SSB,meanDensity}, P_{S-SSB,meanEIRP}, P_{CMAX}, P_{S-SSB,D}(i)) \quad (20)$$

In which, $i$ denotes a transmission opportunity corresponding to the S-SSB, $P_{S-SSB}(i)$ denotes the transmit power of the S-SSB, $P_{CMAX}$ denotes the second transmit power, $P_{S\text{-}SSB,D}(i)$ denotes the fourth transmit power, $P_{S\text{-}SSB,meanDensity}$ denotes the sixth transmit power, and $P_{S\text{-}SSB,meanEIRP}$ denotes the seventh transmit power.

For another example, the transmit power of the S-SSB satisfies:

$$P_{S-SSB}(i) = \min(P_{S-SSB,meanDensity}, P_{CMAX}, P_{S-SSB,D}(i)) \quad (21)$$

In which, $i$ denotes a transmission opportunity corresponding to the S-SSB, $P_{S\text{-}SSB}(i)$ denotes the transmit power of the S-SSB, $P_{CMAX}$ denotes the second transmit power, $P_{S\text{-}SSB,D}(i)$ denotes the fourth transmit power, and $P_{S\text{-}SSB,meanDensity}$ denotes the sixth transmit power.

For another example, the transmit power of the S-SSB satisfies:

$$P_{S-SSB}(i) = \min(P_{S-SSB,meanEIRP}, P_{CMAX}, P_{S-SSB,D}(i)) \quad (22)$$

In which, $i$ denotes a transmission opportunity corresponding to the S-SSB, $P_{S\text{-}SSB}(i)$ denotes the transmit power of the S-SSB, $P_{CMAX}$ denotes the second transmit power, $P_{S\text{-}SSB,D}(i)$ denotes the fourth transmit power, and $P_{S\text{-}SSB,meanEIRP}$ denotes the seventh transmit power.

Further, in Embodiment 3.1, if it is configured to perform power control based on the downlink path loss (for example, the parameter *dl-P0-PSBCH* is configured), the fourth transmit power may be determined based on the downlink path loss. For details, reference may be made to related description of the formula (8) in the foregoing description. Correspondingly, if it is not configured to perform power control based on the downlink path loss, the fourth transmit power may be determined based on one or more of the following: the first transmit power or the second transmit power.

For example, the fourth transmit power may satisfy one of the following:

$$P_{S-SSB,D}(i) = \min(P_1, P_{CMAX});$$

or

$$P_{S-SSB,D} = \min(P_{S-SSB,meanDensity}, P_{S-SSB,meanEIRP}, P_{CMAX});$$

or

$$P_{S-SSB,D} = \min(P_{S-SSB,meanDensity}, P_{CMAX});$$

or

$$P_{S-SSB,D} = \min(P_{S-SSB,meanEIRP}, P_{CMAX});$$

or

$$P_{S-SSB,D} = P_{CMAX}.$$

In the foregoing formula, $P_1$ denotes the first transmit power, $P_{CMAX}$ denotes the second transmit power, $P_{PSSCH,meanDensity}$ denotes the sixth transmit power, and $P_{PSSCH,meanEIRP}$ denotes the seventh transmit power. For details, reference may be made to the foregoing description.

Embodiment 3.2:

In Embodiment 3.2, if it is configured to perform power control based on the downlink path loss (for example, the parameter *dl-P0-PSBCH* is configured), the terminal device determines the transmit power of the S-SSB based on the fourth transmit power. If it is not configured to perform power control based on the downlink path loss, the terminal device may not determine the transmit power of the S-SSB based on the fourth transmit power. For example, the terminal device may determine the transmit power of the S-SSB based only on either or both of the first transmit power and the second transmit power.

For example, if it is configured to perform power control based on the downlink path loss, the transmit power of the S-SSB satisfies:

$$P_{S-SSB}(i) = \min(P_1, P_{CMAX}, P_{S-SSB,D}(i)) \quad (23)$$

In which, $i$ denotes a transmission opportunity corresponding to the S-SSB, $P_{S-SSB}(i)$ denotes the transmit power of the S-SSB, $P_1$ denotes the first transmit power, $P_{CMAX}$ denotes the second transmit power, and $P_{S-SSB,D}(i)$ denotes the fourth transmit power.

For another example, if it is configured to perform power control based on the downlink path loss, the transmit power of the S-SSB satisfies:

$$P_{S-SSB}(i) = \min(P_{S-SSB,meanDensity}, P_{S-SSB,meanEIRP}, P_{CMAX}, P_{S-SSB,D}(i)) \quad (24)$$

In which, $i$ denotes a transmission opportunity corresponding to the S-SSB, $P_{S-SSB}(i)$ denotes the transmit power of the S-SSB, $P_{CMAX}$ denotes the second transmit power, $P_{S-SSB,D}(i)$ denotes the fourth transmit power, $P_{S-SSB,meanDensity}$ denotes the sixth transmit power, and $P_{S-SSB,meanEIRP}$ denotes the seventh transmit power.

For another example, if it is configured to perform power control based on the downlink path loss, the transmit power of the S-SSB satisfies:

$$P_{S-SSB}(i) = \min(P_{S-SSB,meanDensity}, P_{CMAX}, P_{S-SSB,D}(i)) \quad (25)$$

In which, $i$ denotes a transmission opportunity corresponding to the S-SSB, $P_{S-SSB}(i)$ denotes the transmit power of the S-SSB, $P_{CMAX}$ denotes the second transmit power, $P_{S-SSB,D}(i)$ denotes the fourth transmit power, and $P_{S-SSB,meanDensity}$ denotes the sixth transmit power.

For another example, if it is configured to perform power control based on the downlink path loss, the transmit power of the S-SSB satisfies:

$$P_{S-SSB}(i) = \min(P_{S-SSB,meanEIRP}, P_{CMAX}, P_{S-SSB,D}(i)) \quad (26)$$

In which, $i$ denotes a transmission opportunity corresponding to the S-SSB, $P_{S-SSB}(i)$ denotes the transmit power of the S-SSB, $P_{CMAX}$ denotes the second transmit power, $P_{S-SSB,D}(i)$ denotes the fourth transmit power, and $P_{S-SSB,meanEIRP}$ denotes the seventh transmit power.

For another example, if it is not configured to perform power control based on the downlink path loss, the transmit power of the S-SSB satisfies:

$$P_{S-SSB}(i) = \min(P_{S-SSB,meanDensity}, P_{S-SSB,meanEIRP}, P_{CMAX}) \quad (27)$$

In which, $i$ denotes a transmission opportunity corresponding to the S-SSB, $P_{S-SSB}(i)$ denotes the transmit power of the S-SSB, $P_{CMAX}$ denotes the second transmit power, $P_{S-SSB,meanDensity}$ denotes the sixth transmit power, and $P_{S-SSB,meanEIRP}$ denotes the seventh transmit power.

For another example, if it is not configured to perform power control based on the downlink path loss, the transmit power of the S-SSB satisfies:

$$P_{S-SSB}(i) = \min(P_{S-SSB,meanDensity}, P_{CMAX}) \quad (28)$$

In which, $i$ denotes a transmission opportunity corresponding to the S-SSB, $P_{S-SSB}(i)$ denotes the transmit power of the S-SSB, $P_{CMAX}$ denotes the second transmit power, and $P_{S-SSB,meanDensity}$ denotes the sixth transmit power.

For another example, if it is not configured to perform power control based on the downlink path loss, the transmit power of the S-SSB satisfies:

$$P_{S-SSB}(i) = \min(P_{S-SSB,meanEIRP}, P_{CMAX}) \quad (29)$$

In which, $i$ denotes a transmission opportunity corresponding to the S-SSB, $P_{S-SSB}(i)$ denotes the transmit power of the S-SSB, $P_{CMAX}$ denotes the second transmit power, and $P_{S-SSB,meanEIRP}$ denotes the seventh transmit power.

Embodiment 4: Manner of determining transmit power of a PSFCH

If the first sidelink signal is a PSFCH corresponding to a first transmission opportunity, in addition to being determined based on one or more of the first transmit power to the fifth transmit power described above, the transmit power of the PSFCH may be determined further based on one or more of the following: a quantity $N_1$, a quantity $N_2$, or a quantity $N_3$.

The first transmission opportunity may be any transmission opportunity, the first transmission opportunity may refer to a transmission slot, and the first transmission opportunity may refer to a transmission opportunity of the PSFCH in a transmission slot. In the following, a transmission opportunity i is used to represent the first transmission opportunity. The transmission opportunity i may also be replaced with a transmission slot i.

The quantity $N_1$ may be used to indicate a quantity of to-be-transmitted PSFCHs corresponding to the transmission opportunity i. $N_1$ may also be represented as $N_{\mathrm{sch,Tx},PSFCH}$. In embodiments of this application, the two have a same meaning, and may be interchangeable. The $N_1$ PSFCHs include a PSFCH that is used to carry HARQ-ACK information and/or conflict information and that is required to be transmitted by the terminal device in the transmission opportunity i.

The quantity $N_3$ may be used to indicate a maximum quantity of PSFCH transmissions supported by the terminal device. In other words, the quantity $N_3$ may be used to indicate a maximum quantity of PSFCHs to be transmitted simultaneously. $N_3$ may also be represented as $N_{\mathrm{max},PSFCH}$. In embodiments of this application, the two have a same meaning, and may be interchangeable. A value of $N_3$ may be determined based on a capability of the terminal device.

The quantity $N_2$ may be used to indicate a quantity of PSFCHs with successful channel access in the to-be-transmitted PSFCHs. $N_2$ may also be represented as $N_{\mathrm{sch,Tx},PSFCH}^{LBT}$. In embodiments of this application, the two have a same meaning, and may be interchangeable. The quantity $N_{\mathrm{sch,Tx},PSFCH}^{LBT}$ is defined because, in unlicensed spectrum (or shared spectrum), the terminal device is required to determine whether to transmit all or some of PSFCHs based on a channel access result. For example, a resource pool of the shared spectrum includes two RB sets: an RB set 0 and an RB set 1. It is assumed that there is a PSFCH to be transmitted in each of the RB set 0 and the RB set 1. For the transmission opportunity i, if a quantity of PSFCHs to be transmitted on the RB set 0 is 6, and a quantity of PSFCHs to be transmitted on the RB set 1 is 4, $N_{\mathrm{sch,Tx},PSFCH}$ = 10. The terminal device performs listening on each of the two RB sets, and determines, based on a listening result, that a channel on the RB set 0 is idle and a channel on the RB set 1 is busy. Therefore, the terminal device can transmit the six PSFCHs corresponding to the RB set 0 on the RB set 0, but cannot transmit the four PSFCHs corresponding to the RB set 1. In this case, a value of $N_{\mathrm{sch,Tx},PSFCH}^{LBT}$ is 6. It should be understood that $N_{\mathrm{sch,Tx},PSFCH}^{LBT} \leq N_{\mathrm{sch,Tx},PSFCH}$, where $N_{\mathrm{sch,Tx},PSFCH}^{LBT}$ may be greater than, equal to, or less than $N_{\mathrm{max},PSFCH}$.

For ease of description, a parameter $N_{\mathrm{Tx,PSFCH}}$ (or referred to as $N_5$) and a parameter $N_{\mathrm{final,Tx,PSFCH}}$ (or referred to as $N_6$) are defined in embodiments of this application. The parameter $N_{\mathrm{Tx,PSFCH}}$ represents a quantity of PSFCHs selected or determined by the terminal device. The parameter $N_{\mathrm{final,Tx,PSFCH}}$ represents a quantity of PSFCHs transmitted simultaneously in the PSFCH transmission opportunity i. That is, for the transmission opportunity i, transmit power of a $k^{\mathrm{th}}$ PSFCH is denoted as $P_{\mathrm{PSFCH},k}(i)$, and a value range of k satisfies $1 \leq k \leq N_{\mathrm{final,Tx,PSFCH}}$.

There may be two implementations for determining $N_{\mathrm{Tx,PSFCH}}$ and $N_{\mathrm{final,Tx,PSFCH}}$. In the following, the two implementations are referred to as an implementation 1 and an implementation 2, respectively.

In the implementation 1, the terminal device may first determine $N_{\mathrm{sch,Tx},PSFCH}^{LBT}$ PSFCHs from $N_{\mathrm{sch,Tx},PSFCH}$ PSFCHs based on an LBT result, then determine $N_{\mathrm{Tx,PSFCH}}$ PSFCHs from $N_{\mathrm{sch,Tx},PSFCH}^{LBT}$ PSFCHs, and determine transmit power of each PSFCH in the $N_{\mathrm{Tx,PSFCH}}$ PSFCHs. In the implementation 1, $N_{\mathrm{final,Tx,PSFCH}}$ = $N_{\mathrm{Tx,PSFCH}}$.

In the implementation 2, the terminal device may first determine $N_{\mathrm{Tx,PSFCH}}$ PSFCHs from $N_{\mathrm{sch,Tx},PSFCH}$ PSFCHs, and determine transmit power of each PSFCH. Further, the terminal device may perform channel access for the $N_{\mathrm{Tx,PSFCH}}$ PSFCHs, and record a quantity of PSFCHs with successful channel access as $N_{\mathrm{final,Tx,PSFCH}}$. Therefore, in the implementation 2, $N_{\mathrm{final,Tx,PSFCH}} \leq N_{\mathrm{Tx,PSFCH}}$.

The quantity $N_{\mathrm{Tx,PSFCH}}$ of PSFCHs selected by the terminal device and transmit power of each PSFCH in the selected PSFCHs may be determined based on a relationship between $N_4$ and $N_{\mathrm{max},PSFCH}$. $N_4$ mentioned herein is equal to $N_{\mathrm{sch,Tx},PSFCH}$ or $N_{\mathrm{sch,Tx},PSFCH}^{LBT}$. For example, if the terminal device uses the implementation 1 mentioned above, $N_4$ is equal to $N_{\mathrm{sch,Tx},PSFCH}^{LBT}$. For another example, if the terminal device uses the implementation 2 mentioned above, $N_4$ is equal to $N_{\mathrm{sch,Tx},PSFCH}$.

The following discusses different cases of the relationship between $N_4$ and $N_{\mathrm{max},PSFCH}$.

*-Case 1: $N_4$ is less than or equal to $N_{max,PSFCH}$*

In Case 1, the quantity $N_{Tx,PSFCH}$ of PSFCHs selected by the terminal device and transmit power of each PSFCH in the selected PSFCHs may be determined based on a specific condition (the condition is referred to as a first condition hereinafter).

In some implementations, the first condition may include: assuming $N_4$ PSFCHs are each transmitted at the fourth transmit power, if total power of the $N_4$ PSFCHs is less than or equal to eighth transmit power, the quantity $N_{Tx,PSFCH}$ of selected PSFCHs is equal to $N_4$, and the transmit power of each PSFCH is equal to the fourth transmit power.

For a manner of determining the fourth transmit power mentioned herein, reference may be made to related description of the formula (9) in the foregoing description. Details are not described herein again.

The eighth transmit power may be determined based on the first transmit power and/or the second transmit power. In some implementations, the eighth power may be determined based on a minimum value of the first transmit power and the second transmit power. For example, the eighth transmit power may be equal to one of the following:

$$min(P_1, P_{CMAX});$$

$$min(P_{PSFCH,meanDensity}, P_{PSFCH,meanEIRP}, P_{CMAX});$$

$$min(P_{PSFCH,meanDensity}, P_{CMAX});$$

or

$$min(P_{PSFCH,meanEIRP}, P_{CMAX}).$$

It should be understood that an example in which the eighth transmit power is equal to $min(P_1, P_{CMAX})$ is mainly used for description in the following. The eighth transmit power may alternatively be replaced with any one of the other three values than $min(P_1, P_{CMAX})$.

In a specific example of the first condition, if $P_{PSFCH,one} + 10log_{10}(N_4) \leq min(P_1, P_{CMAX})$, $N_{Tx,PSFCH}$ is equal to $N_4$; and $P_{PSFCH,k}(i)$ is equal to $P_{PSFCH,one}$. In this example, $P_{PSFCH,one}$ denotes the fourth transmit power (reference is made to related description of the formula (9) in the foregoing description); $P_1$ denotes the first transmit power; $P_{CMAX}$ denotes the second transmit power; and $min(P_1, P_{CMAX})$ denotes the eighth transmit power.

In some implementations, the first condition may include: assuming $N_4$ PSFCHs are each transmitted at the fourth transmit power, if total power of the $N_4$ PSFCHs is greater than the eighth transmit power, the quantity $N_{Tx,PSFCH}$ of selected PSFCHs is determined based on priorities of the $N_4$ PSFCHs, and transmit power of each PSFCH is determined based on the fourth transmit power and/or ninth transmit power. For a manner of defining the eighth transmit power, reference may be made to the foregoing description. Details are not described herein again. The ninth transmit power is an average transmit power obtained by evenly distributing the eighth transmit power among the selected $N_{Tx,PSFCH}$ PSFCHs.

In another specific example of the first condition, assuming $N_4$ PSFCHs are each transmitted at the fourth transmit power, if total power of the $N_4$ PSFCHs is greater than the eighth transmit power, the terminal device may independently determine $N_{Tx,PSFCH}$ PSFCHs based on ascending order of priority values (that is, a value of a priority of a PSFCH selected by the terminal device is less than or equal to a value of a priority of a PSFCH unselected). Further, the terminal device may preferentially select PSFCHs carrying HARQ-ACK information, and then selects PSFCHs carrying conflict information, where $N_{Tx,PSFCH} \geq max(1, \sum_{i=1}^{K} M_i)$. For the PSFCHs carrying HARQ-ACK information, $M_i$ ($1 \leq i \leq 8$) denotes a quantity of PSFCHs corresponding to a priority value i; and for the PSFCHs carrying conflict information, $M_i$ ($i > 8$) denotes a quantity of PSFCHs corresponding to a priority value ($i - 8$).

A value of K in the foregoing description may be a maximum value that satisfies the following formula. Otherwise,

$$K = 0: \quad P_{PSFCH,one} + 10log_{10}(max(1, \sum_{i=1}^{K} M_i)) \leq min(P_1, P_{CMAX}).$$

In addition, in this example, the transmit power of each PSFCH satisfies the following formula: $P_{PSFCH,k}(i) = min(min(P_1, P_{CMAX}) - 10log_{10}(N_{Tx,PSFCH}), P_{PSFCH,one})$, where $min(P_1, P_{CMAX})$ denotes the eighth transmit power. $min(P_1, P_{CMAX}) - 10log_{10}(N_{Tx,PSFCH})$ denotes the ninth transmit power.

*-Case 2: $N_4$ is greater than $N_{max,PSFCH}$.*

In a case in which $N_4$ is greater than $N_{max,PSFCH}$, the terminal device may determine $N_{max,PSFCH}$ PSFCHs based on ascending order of priority values of PSFCHs (that is, a value of a priority of a PSFCH selected by the terminal device is less than or equal to a value of a priority of a PSFCH unselected). Then, the terminal device may determine a quantity $N_{Tx,PSFCH}$ of selected PSFCHs and transmit power of each PSFCH in the selected PSFCHs based on the $N_{max,PSFCH}$ PSFCHs.

In some implementations, the quantity $N_{Tx,PSFCH}$ of PSFCHs selected by the terminal device and transmit power of each PSFCH in the selected PSFCHs may be determined based on a specific condition (the condition is referred to as a second condition hereinafter).

In some implementations, the second condition may include: assuming $N_{max,PSFCH}$ PSFCHs are each transmitted at the fourth transmit power, if total power of the $N_{max,PSFCH}$ PSFCHs is less than or equal to the eighth transmit power, the quantity $N_{Tx,PSFCH}$ of selected PSFCHs is equal to $N_{max,PSFCH}$, and the transmit power of each PSFCH is equal to the fourth transmit power.

For a manner of determining the fourth transmit power mentioned herein, reference may be made to related description of the formula (9) in the foregoing description. Details are not described herein again.

The eighth transmit power may be determined based on the first transmit power and/or the second transmit power. In some implementations, the eighth transmit power may be determined based on a minimum value of the first transmit power and the second transmit power. For example, the eighth transmit power may be equal to one of the following:

$$min(P_1, P_{CMAX});$$

$$min(P_{PSFCH,meanDensity}, P_{PSFCH,meanEIRP}, P_{CMAX});$$

$$min(P_{PSFCH,meanDensity}, P_{CMAX});$$

or

$$min(P_{PSFCH,meanEIRP}, P_{CMAX}).$$

It should be understood that an example in which the eighth transmit power is equal to $min(P_1, P_{CMAX})$ is mainly used for description in the following. The eighth transmit power may alternatively be replaced with any one of the other three values than $min(P_1, P_{CMAX})$.

In a specific example of the second condition, if $P_{PSFCH,one} + 10log_{10}(N_{max,PSFCH}) \leq min(P_1, P_{CMAX})$, $N_{Tx,PSFCH}$ is equal to $N_{max,PSFCH}$; and $P_{PSFCH,k}(i)$ is equal to $P_{PSFCH,one}$. In this example, $P_{PSFCH,one}$ denotes the fourth transmit power (reference is made to related description of the formula (9) in the foregoing description); $P_1$ denotes the first transmit power; $P_{CMAX}$ denotes the second transmit power; and $min(P_1, P_{CMAX})$ denotes the eighth transmit power.

In some implementations, the second condition may include: assuming $N_{max,PSFCH}$ PSFCHs are each transmitted at the fourth transmit power, if total power of the $N_{max,PSFCH}$ PSFCHs is greater than the eighth transmit power, the quantity $N_{Tx,PSFCH}$ of selected PSFCHs is determined based on priorities of the $N_{max,PSFCH}$ PSFCHs, and transmit power of each PSFCH is determined based on the fourth transmit power and/or ninth transmit power. For a manner of defining the eighth transmit power, reference may be made to the foregoing description. Details are not described herein again. The ninth transmit power is an average transmit power obtained by evenly distributing the eighth transmit power among the selected $N_{Tx,PSFCH}$ PSFCHs.

In another specific example of the second condition, the terminal device may independently determine $N_{Tx,PSFCH}$ PSFCHs based on ascending order of priority values (that is, a value of a priority of a PSFCH selected by the terminal device is less than or equal to a value of a priority of a PSFCH unselected). In a process of determining the $N_{Tx,PSFCH}$ PSFCHs, the terminal device may preferentially select PSFCHs carrying HARQ-ACK information, and then select PSFCHs carrying conflict information. In which, $N_{Tx,PSFCH} \geq max(1, \sum_{i=1}^{K} M_i)$. For the PSFCHs carrying HARQ-ACK information, $M_i$ ($1 \leq i \leq 8$) denotes a quantity of PSFCHs corresponding to a priority value i; and for the PSFCHs carrying conflict information, $M_i$ ($i > 8$) denotes a quantity of PSFCHs corresponding to a priority value ($i$ - 8).

K in the foregoing description is a maximum value that satisfies the following formula; otherwise, K = 0: $P_{PSFCH,one} + 10log_{10}(max(1, \sum_{i=1}^{K} M_i)) \leq min(P_1, P_{CMAX})$.

In addition, in this example, the transmit power of each PSFCH satisfies the following formula: $P_{\text{PSFCH},k}(i) = min$ $(min(P_1, P_{\text{CMAX}}) - 10log_{10}(N_{\text{Tx,PSFCH}}), P_{\text{PSFCH,one}})$.

In some implementations, a manner of determining power of the PSFCH in the foregoing description may be implemented in a case in which it is configured to perform power control for the PSFCH based on the downlink path loss. If it is not configured to perform power control based on the downlink path loss (for example, the parameter *dl-P0-PSFCH* is not configured), the terminal device may select $N_{\text{Tx,PSFCH}}$ PSFCHs from $N_4$ PSFCHs based on ascending order of priority values of PSFCHs (that is, a value of a priority of a PSFCH selected by the terminal device is less than or equal to a value of a priority of a PSFCH unselected). Transmit power of each PSFCH in the $N_{\text{Tx,PSFCH}}$ PSFCHs may be determined based on ninth transmit power, the ninth transmit power is an average transmit power obtained by evenly distributing the eighth transmit power among the selected $N_{\text{Tx,PSFCH}}$ PSFCHs, and the eighth transmit power is determined based on the first transmit power and/or the second transmit power.

For example, the terminal independently selects $N_{\text{Tx,PSFCH}}$ ($N_{\text{Tx,PSFCH}}$ = 1) PSFCHs based on ascending order of priority values, and transmit power of each PSFCH is $P_{\text{PSFCH},k}(i) = min(P_1, P_{\text{CMAX}}) - 10log_{10}(N_{\text{Tx,PSFCH}})$. $min(P_1, P_{\text{CMAX}})$ denotes the eighth transmit power, $min(P_1, P_{\text{CMAX}}) - 10log_{10}(N_{\text{Tx,PSFCH}})$ denotes the ninth transmit power, and $P_{\text{PSFCH},k}(i)$ denotes the transmit power of each PSFCH.

In the foregoing implementations, if $N_4$ is equal to $N_{\text{sch.Tx},PSFCH}^{LBT}$ (that is, the implementation 1 mentioned above is used), after $N_{\text{Tx},PSFCH}$ PSFCHs are obtained, because all the $N_{\text{Tx},PSFCH}$ PSFCHs are PSFCHs with successful LBT, the $N_{\text{Tx},PSFCH}$ PSFCHs are $N_{\text{final,Tx,PSFCH}}$ PSFCHs that are finally actually transmitted.

In the foregoing implementations, if $N_4$ is equal to $N_{\text{sch,Tx,PSFCH}}$ (that is, the implementation 2 mentioned above is used), after $N_{\text{Tx},PSFCH}$ PSFCHs are obtained, because LBT is not performed, a value of $N_{\text{final,Tx,PSFCH}}$ is determined based on a quantity of PSFCHs with successful channel access in the selected $N_{\text{Tx,PSFCH}}$ PSFCHs. For example, a value of $N_{\text{final,Tx,PSFCH}}$ is equal to a quantity of PSFCHs with successful channel access in the selected $N_{\text{Tx,PSFCH}}$ PSFCHs.

Finally, the terminal device obtains the $N_{\text{final,Tx,PSFCH}}$ PSFCHs that are required to be actually transmitted, and transmit power of each PSFCH is $P_{\text{PSFCH},k}(i)$ mentioned above.

It should be noted that a unit of the transmit power mentioned above may be dBm, that is, decibel-milliwatts.

It should be noted that the subcarrier spacing in the foregoing description may refer to a sidelink subcarrier spacing.

The foregoing describes the method embodiments of this application in detail with reference to FIG. 1 to FIG. 16. The following describes the apparatus embodiments of this application in detail with reference to FIG. 17 to FIG. 18. It should be understood that the description of the method embodiment corresponds to the description of the apparatus embodiment. Therefore, for a part that is not described in detail, reference may be made to the foregoing method embodiment.

FIG. 17 is a schematic structural diagram of a terminal device according to an embodiment of this application. A terminal device 1700 shown in FIG. 17 may include a determining module 1710. The determining module 1710 may be configured to determine transmit power of a first sidelink signal in shared spectrum based on one or more of the following: first transmit power, determined based on a power limit; second transmit power, determined based on a maximum transmit power of the terminal device; third transmit power, determined based on a sidelink priority and/or a channel busy ratio; fourth transmit power, determined based on a downlink path loss or the second transmit power; or fifth transmit power, determined based on a sidelink path loss or the second transmit power.

In some implementations, the power limit includes one or more of the following: a mean equivalent isotropically radiated power density limit; or a mean equivalent isotropically radiated power limit.

In some implementations, the first transmit power includes one or more of the following: sixth transmit power, determined based on a mean equivalent isotropically radiated power density limit; or seventh transmit power, determined based on a mean equivalent isotropically radiated power limit.

In some implementations, the sixth transmit power is further determined based on one or more of the following: a frequency domain resource corresponding to the first sidelink signal in a unit frequency range; a quantity of PRBs included in the first sidelink signal; a quantity of subcarriers included in one PRB; or a subcarrier spacing of a frequency resource corresponding to the first sidelink signal.

In some implementations, the sixth transmit power determined based on the frequency domain resource corresponding to the first sidelink signal in the unit frequency range includes: the sixth transmit power determined based on a maximum value of a frequency domain resource occupied by the first sidelink signal in the unit frequency range.

In some implementations, the unit frequency range may correspond to a frequency range of 1 MHz.

In some implementations, the unit frequency range is any unit frequency range within a frequency domain resource corresponding to the first sidelink signal.

In some implementations, the sixth transmit power satisfies:

$$P_6 = \text{Y} - 10log_{10}(BW) + 10log_{10}(M_{RB} \cdot N_{RB}^{SC} \cdot \Delta f)$$, where Y denotes the mean equivalent isotropically radiated power density limit, *BW* denotes the frequency domain resource corresponding to the first sidelink signal in the unit frequency range, $M_{RB}$ denotes the quantity of PRBs included in the first sidelink signal, $N_{RB}^{SC}$ denotes the quantity of subcarriers included in one PRB, and $\Delta f$ denotes the subcarrier spacing of the frequency resource corresponding to the first sidelink signal.

In some implementations, the seventh transmit power is less than or equal to transmit power indicated by the mean equivalent isotropically radiated power limit.

In some implementations, the transmit power of the first sidelink signal is determined based on a minimum value of one or more of the following: the first transmit power, the second transmit power, the third transmit power, the fourth transmit power, or the fifth transmit power.

In some implementations, if for the first PSSCH, transmit power of the PSSCH on a symbol including no PSCCH transmission satisfies: $P_{PSSCH}(i) = \min(P_1, P_{CMAX}, P_{MAX\_CBR}, \min(P_{PSSCH,D}(i), P_{PSSCH,SL}(i)))$, where i denotes a transmission opportunity corresponding to the PSSCH, $P_{PSSCH}(i)$ denotes the transmit power of the PSSCH on the symbol including no PSCCH transmission, $P_1$ denotes the first transmit power, $P_{CMAX}$ denotes the second transmit power, $P_{MAX\_CBR}$ denotes the third transmit power, $P_{PSSCH,D}(i)$ denotes the fourth transmit power, and $P_{PSSCH,SL}(i)$ denotes the fifth transmit power.

In some implementations, transmit power of the PSSCH on a symbol including PSCCH transmission satisfies:

$$P_{PSSCH2}(i) = 10\log_{10}(\frac{M_{RB}^{PSSCH} - M_{RB}^{PSCCH}}{M_{RB}^{PSSCH}}) + P_{PSSCH}(i)$$, where i denotes a transmission opportunity corresponding to the PSSCH, $P_{PSSCH2}(i)$ denotes the transmit power of the PSSCH on the symbol including PSCCH transmission, $M_{RB}^{PSCCH}$ denotes a quantity of PRBs occupied by the PSCCH, $M_{RB}^{PSSCH}$ denotes a quantity of PRBs occupied by the PSSCH on the symbol including no PSCCH transmission.

In some implementations, if the first sidelink signal is a PSCCH, transmit power of the PSCCH satisfies:

$$P_{PSCCH}(i) = 10\log_{10}(\frac{M_{RB}^{PSCCH}}{M_{RB}^{PSSCH}}) + P_{PSSCH}(i)$$, where $M_{RB}^{PSCCH}$ denotes a quantity of PRBs occupied by the PSCCH, and $M_{RB}^{PSSCH}$ denotes a quantity of PRBs occupied by the PSSCH on the symbol including no PSCCH transmission.

In some implementations, if it is not configured to perform power control for the PSSCH based on the downlink path loss, the fourth transmit power is determined based on one or more of the following: the first transmit power, the second transmit power, or the third transmit power.

In some implementations, the fourth transmit power satisfies: $P_{PSSCH,D}(i) = \min(P_1, P_{CMAX}, P_{MAX\_CBR})$.

In some implementations, if it is configured to perform power control for the PSSCH based on the downlink path loss, the fourth transmit power satisfies: $P_{PSSCH,D}(i) = P_{0,D} + 10\log_{10}(2^\mu \cdot M_{RB}^{PSSCH}) + \alpha_D \cdot PL_D$, where $P_{0,D}$ denotes a P0 value for power control based on the downlink path loss, $PL_D$ denotes the downlink path loss, $\alpha_D$ denotes an $\alpha$ value for power control based on the downlink path loss, $M_{RB}^{PSSCH}$ denotes a quantity of PRBs occupied by the PSSCH on the symbol including no PSCCH transmission, $\mu$ is determined based on a subcarrier spacing, and $P_{PSSCH,D}(i)$ denotes the fourth transmit power.

In some implementations, if it is not configured to perform power control for the PSSCH based on the sidelink path loss, the fifth transmit power is determined based on one or more of the following: the first transmit power, the second transmit power, the third transmit power, or the fourth transmit power.

In some implementations, the fifth transmit power satisfies: $P_{PSSCH,SL}(i) = \min(P_1, P_{CMAX}, P_{MAX\_CBR})$; or $P_{PSSCH,SL}(i) = \min(P_1, P_{CMAX}, P_{PSSCH,D}(i))$.

In some implementations, if it is configured to perform power control for the PSSCH based on the sidelink path loss, the fifth transmit power satisfies: $P_{PSSCH,SL}(i) = P_{0,SL} + 10\log_{10}(2^\mu \cdot M_{RB}^{PSSCH}) + \alpha_{SL} \cdot PL_{SL}$, where $P_{0,SL}$ denotes a P0 value for power control based on the sidelink path loss, $PL_{SL}$ denotes the sidelink path loss, $\alpha_{SL}$ denotes an $\alpha$ value for power control based on the sidelink path loss, $M_{RB}^{PSSCH}$ denotes a quantity of PRBs occupied by the PSSCH on the symbol including no PSCCH transmission, $\mu$ is determined based on a subcarrier spacing, and $P_{PSSCH,SL}(i)$ denotes the fifth transmit power.

In some implementations, if the first sidelink signal is an S-SSB, transmit power of the S-SSB satisfies: $P_{S-SSB}(i) = \min(P_1, P_{CMAX}, P_{S-SSB,D}(i))$, where i denotes a transmission opportunity corresponding to the S-SSB, $P_{S-SSB}(i)$ denotes the transmit power of the S-SSB, $P_1$ denotes the first transmit power, $P_{CMAX}$ denotes the second transmit power, and $P_{S-SSB,D}$

(*i*) denotes the fourth transmit power.

In some implementations, if it is configured to perform power control for the S-SSB based on the downlink path loss, the fourth transmit power satisfies: $P_{S-SSB,D}(i) = P_{0,\text{S-SSB}} + 10\log_{10}(2^u \cdot M_{RB}^{\text{S-SSB}}) + \alpha_{\text{S-SSB}} \cdot PL$ , where $P_{0,\text{S-SSB}}$ denotes a P0 value for power control for the S-SSB based on the downlink path loss, *PL* denotes the downlink path loss, $\alpha_{\text{S-SSB}}$ denotes an $\alpha$ value for power control based on the downlink path loss, $M_{RB}^{\text{S-SSB}}$ is determined based on a quantity of PRBs occupied by the SSB, and $\mu$ is determined based on a subcarrier spacing.

In some implementations, if it is not configured to perform power control for the S-SSB based on the downlink path loss, the fourth transmit power satisfies: $P_{S-SSB,D}(i) = \min(P_1, P_{CMAX})$; or $P_{S-SSB,D}(i) = P_{CMAX}$.

In some implementations, if the first sidelink signal is a PSFCH corresponding to a first transmission opportunity, transmit power of the PSFCH is determined based on one or more of the following: a quantity $N_1$, used to indicate a quantity of to-be-transmitted PSFCHs corresponding to the first transmission opportunity; a quantity $N_2$, used to indicate a quantity of PSFCHs with successful channel access in the to-be-transmitted PSFCHs; or a quantity $N_3$, used to indicate a maximum quantity of PSFCH transmissions supported by the terminal device.

In some implementations, if it is configured to perform power control for the first sidelink signal based on the downlink path loss, the fourth transmit power satisfies:

$$P_{\text{PSFCH,one}} = P_{O,PSFCH} + 10\,log_{10}\big(2^\mu \cdot M_{\text{RB}}^{\text{PSFCH,one}}\big) + \alpha_{PSFCH} \cdot PL$$

, where *i* denotes a transmission opportunity corresponding to the PSFCH, $P_{O,PSFCH}$ denotes a P0 value for power control for the PSFCH based on the downlink path loss, *PL* denotes the downlink path loss, $\alpha_{PSFCH}$ denotes an $\alpha$ value for power control based on the downlink path loss, $M_{\text{RB}}^{\text{PSFCH,one}}$ is determined based on a quantity of PRBs occupied by one PSFCH, $\mu$ is determined based on a subcarrier spacing, and $P_{\text{PSFCH,one}}$ denotes the fourth transmit power.

In some implementations, in a case in which $N_4$ is less than or equal to $N_3$, a quantity $N_5$ of selected PSFCHs and transmit power of each PSFCH in the selected PSFCHs are determined based on a first condition, and the first condition includes one or more of the following: assuming $N_4$ PSFCHs are each transmitted at the fourth transmit power, if total power of the $N_4$ PSFCHs is less than or equal to eighth transmit power, the quantity $N_5$ of selected PSFCHs is equal to $N_4$, and the transmit power of each PSFCH is equal to the fourth transmit power; or assuming $N_4$ PSFCHs are each transmitted at the fourth transmit power, if total power of the $N_4$ PSFCHs is greater than the eighth transmit power, the quantity $N_5$ of selected PSFCHs is determined based on priorities of the $N_4$ PSFCHs, and the transmit power of each PSFCH is determined based on the fourth transmit power and/or ninth transmit power, where $N_4$ is equal to $N_1$ or $N_2$, the eighth transmit power is determined based on the first transmit power and/or the second transmit power, and the ninth transmit power is an average transmit power obtained by evenly distributing the eighth transmit power among the $N_5$ selected PSFCHs.

In some implementations, the determining module is further configured to: in a case in which $N_4$ is greater than $N_3$, determine $N_3$ PSFCHs based on ascending order of priority values of PSFCHs; and determine, based on the $N_3$ PSFCHs, a quantity $N_5$ of selected PSFCHs and transmit power of each PSFCH in the selected PSFCHs, where $N_4$ is equal to $N_1$ or $N_2$.

In some implementations, the quantity $N_5$ of selected PSFCHs and the transmit power of each PSFCH in the selected PSFCHs are determined based on a second condition, and the second condition includes one or more of the following: assuming the $N_3$ PSFCHs are each transmitted at the fourth transmit power, if total power of the $N_3$ PSFCHs is less than or equal to eighth transmit power, the quantity $N_5$ of selected PSFCHs is equal to $N_3$, and the transmit power of each PSFCH is equal to the fourth transmit power; or assuming the $N_3$ PSFCHs are each transmitted at the fourth transmit power, if total power of the $N_3$ PSFCHs is greater than the eighth transmit power, the quantity $N_5$ of selected PSFCHs is determined based on priorities of the $N_3$ PSFCHs, and the transmit power of each PSFCH is determined based on the fourth transmit power and/or ninth transmit power, where the eighth transmit power is determined based on the first transmit power and/or the second transmit power, and the ninth transmit power is an average transmit power obtained by evenly distributing the eighth transmit power among the $N_5$ selected PSFCHs.

In some implementations, the terminal device further includes: a selection module, configured to: if it is not configured to perform power control for the PSFCH based on the downlink path loss, select $N_5$ PSFCHs from $N_4$ PSFCHs based on ascending order of priority values of PSFCHs, where $N_4$ is equal to $N_1$ or $N_2$, transmit power of each PSFCH in the $N_5$ PSFCHs is determined based on ninth transmit power, the ninth transmit power is an average transmit power obtained by evenly distributing the eighth transmit power among the selected $N_5$ PSFCHs, and the eighth transmit power is determined based on the first transmit power and/or the second transmit power.

In some implementations, if $N_4$ is equal to $N_1$, a quantity of actually transmitted PSFCHs corresponding to the first transmission opportunity is $N_6$, and a value of $N_6$ is determined based on a quantity of PSFCHs with successful channel access in the selected $N_5$ PSFCHs.

In some implementations, if $N_4$ is equal to $N_2$, a quantity of actually transmitted PSFCHs corresponding to the first transmission opportunity is $N_5$.

FIG. 18 is a schematic structural diagram of an apparatus according to an embodiment of this application. Dashed lines in FIG. 18 indicate that a unit or module is optional. The apparatus 1800 may be configured to implement the method described in the foregoing method embodiments. The apparatus 1800 may be a chip or a terminal device.

The apparatus 1800 may include one or more processors 1810. The processor 1810 may support the apparatus 1800 in implementing the methods described in the foregoing method embodiments. The processor 1810 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 1800 may further include one or more memories 1820. The memory 1820 stores a program that may be executed by the processor 1810 to cause the processor 1810 to perform the methods described in the foregoing method embodiments. The memory 1820 may be separated from or integrated into the processor 1810.

The apparatus 1800 may further include a transceiver 1830. The processor 1810 may communicate with another device or chip through the transceiver 1830. For example, the processor 1810 may transmit data to and receive data from another device or chip through the transceiver 1830.

An embodiment of this application further provides a computer-readable storage medium for storing a program. The computer-readable storage medium may be applied to the terminal device provided in embodiments of this application, and the program causes a computer to perform the methods performed by the terminal device in various embodiments of this application.

An embodiment of this application further provides a computer program product. The computer program product includes a program. The computer program product may be applied to the terminal device provided in embodiments of this application, and the program causes a computer to perform the methods performed by the terminal device in various embodiments of this application.

An embodiment of this application further provides a computer program. The computer program may be applied to the terminal device provided in embodiments of this application, and the computer program causes a computer to perform the methods performed by the terminal device in various embodiments of this application.

It should be understood that the terms "system" and "network" in this application may be used interchangeably. In addition, the terms used in this application are used only to illustrate specific embodiments of this application, but are not intended to limit this application. The terms "first", "second", "third", "fourth", and the like in the specification, claims, and drawings of this application are used to distinguish between different objects, rather than to describe a specific order. In addition, the terms "include" and "have" and any variations thereof are intended to cover a non-exclusive inclusion.

In embodiments of this application, "indication" mentioned herein may refer to a direct indication, or may refer to an indirect indication, or may mean that there is an association relationship. For example, if A indicates B, it may mean that A directly indicates B, for example, B can be obtained from A. Alternatively, it may mean that A indirectly indicates B, for example, A indicates C, and B can be obtained from C. Alternatively, it may mean that there is an association relationship between A and B.

In embodiments of this application, "B corresponding to A" means that B is associated with A, and B may be determined based on A. However, it should be further understood that, determining B based on A does not mean determining B based only on A, but instead, B may be determined based on A and/or other information.

In embodiments of this application, the term "correspond" may mean that there is a direct or indirect correspondence between the two, or may mean that there is an association relationship between the two, or may mean that there is a relationship such as indicating and being indicated, or configuring and being configured.

In embodiments of this application, "predefined" or "pre-configured" may be implemented by pre-storing corresponding code, tables, or other forms that may be used to indicate related information in devices (for example, including a terminal device and a network device), and a specific implementation thereof is not limited in this application. For example, being predefined may refer to being defined in a protocol.

In embodiments of this application, the "protocol" may refer to a standard protocol in the communications field, and may include, for example, an LTE protocol, an NR protocol, and a related protocol applied to a future communications system, which is not limited in this application.

In embodiments of this application, the term "and/or" is merely an association relationship that describes associated objects, and represents that there may be three relationships. For example, A and/or B may represent three cases: only A exists, both A and B exist, and only B exists. In addition, the character "/" in the specification generally indicates an "or" relationship between the associated objects.

In embodiments of this application, sequence numbers of the foregoing processes do not mean execution sequences. The execution sequences of the processes should be determined according to functions and internal logic of the processes, and should not be construed as any limitation on the implementation processes of embodiments of this application.

In several embodiments provided in this application, it should be understood that the disclosed system, apparatus, and method may be implemented in another manner. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented as indirect couplings or communication connections through some interfaces, apparatus or units, and may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected according to actual needs to achieve the objective of the solutions of embodiments.

In addition, function units in embodiments of this application may be integrated into one processing unit, or each of the units may exist alone physically, or two or more units may be integrated into one unit.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (for example, a coaxial cable, an optical fiber, and a digital subscriber line (digital subscriber line, DSL)) manner or a wireless (for example, infrared, radio, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive (solid state disk, SSD)), or the like.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

**Claims**

1. A power control method, comprising:
   determining, by a terminal device, transmit power of a first sidelink signal in shared spectrum based on one or more of following:

   first transmit power, determined based on a power limit;
   second transmit power, determined based on a maximum transmit power of the terminal device;
   third transmit power, determined based on a sidelink priority and/or a channel busy ratio;
   fourth transmit power, determined based on a downlink path loss or the second transmit power; or
   fifth transmit power, determined based on a sidelink path loss or the second transmit power.

2. The method according to claim 1, wherein the power limit comprises one or more of following:

   a mean equivalent isotropically radiated power density limit; or
   a mean equivalent isotropically radiated power limit.

3. The method according to claim 1 or 2, wherein the first transmit power comprises one or more of following:

   sixth transmit power, determined based on a mean equivalent isotropically radiated power density limit; or
   seventh transmit power, determined based on a mean equivalent isotropically radiated power limit.

**EP 4 615 070 A1**

4. The method according to claim 3, wherein the sixth transmit power is further determined based on one or more of following:

    a frequency domain resource corresponding to the first sidelink signal in a unit frequency range;
    a quantity of physical resource blocks PRBs comprised in the first sidelink signal;
    a quantity of subcarriers comprised in one PRB; or
    a subcarrier spacing of a frequency resource corresponding to the first sidelink signal.

5. The method according to claim 4, wherein the sixth transmit power determined based on the frequency domain resource corresponding to the first sidelink signal in the unit frequency range comprises: the sixth transmit power determined based on a maximum value of a frequency domain resource occupied by the first sidelink signal in the unit frequency range.

6. The method according to claim 4 or 5, wherein the unit frequency range corresponds to a frequency range of 1 MHz.

7. The method according to any one of claims 4 to 6, wherein the unit frequency range is any unit frequency range within a frequency domain resource corresponding to the first sidelink signal.

8. The method according to any one of claims 4 to 7, wherein the the sixth transmit power satisfies:

$$P_6 = \text{Y} - 10log_{10}(BW) + 10log_{10}(M_{RB} \cdot N_{RB}^{SC} \cdot \Delta f),$$

wherein Y denotes the mean equivalent isotropically radiated power density limit, $BW$ denotes the frequency domain resource corresponding to the first sidelink signal in the unit frequency range, $M_{RB}$ denotes the quantity of PRBs comprised in the first sidelink signal, $N_{RB}^{SC}$ denotes the quantity of subcarriers comprised in one PRB, and $\Delta f$ denotes the subcarrier spacing of the frequency resource corresponding to the first sidelink signal.

9. The method according to any one of claims 3 to 8, wherein the seventh transmit power is less than or equal to transmit power indicated by the mean equivalent isotropically radiated power limit.

10. The method according to any one of claims 1 to 9, wherein the transmit power of the first sidelink signal is determined based on a minimum value of one or more of following: the first transmit power, the second transmit power, the third transmit power, the fourth transmit power, or the fifth transmit power.

11. The method according to any one of claims 1 to 10, wherein if the first sidelink signal is a physical sidelink shared channel PSSCH, transmit power of the PSSCH on a symbol comprising no physical sidelink control channel PSCCH transmission satisfies:

$$P_{PSSCH}(i) = \min\left(P_1, P_{\text{CMAX}}, P_{MAX\_CBR}, \min\left(P_{PSSCH,D}(i), P_{PSSCH,SL}(i)\right)\right),$$

wherein i denotes a transmission opportunity corresponding to the PSSCH, $P_{PSSCH}(i)$ denotes the transmit power of the PSSCH on the symbol comprising no PSCCH transmission, $P_1$ denotes the first transmit power, $P_{\text{CMAX}}$ denotes the second transmit power, $P_{MAX\_CBR}$ denotes the third transmit power, $P_{PSSCH,D}(i)$ denotes the fourth transmit power, and $P_{PSSCH,SL}(i)$ denotes the fifth transmit power.

12. The method according to claim 11, wherein transmit power of the PSSCH on a symbol comprising PSCCH transmission satisfies:

$$P_{PSSCH2}(i) = 10log_{10}(\frac{M_{RB}^{PSSCH} - M_{RB}^{PSCCH}}{M_{RB}^{PSSCH}}) + P_{PSSCH}(i),$$

wherein i denotes a transmission opportunity corresponding to the PSSCH, $P_{PSSCH2}(i)$ denotes the transmit power of the PSSCH on the symbol comprising PSCCH transmission, $M_{RB}^{PSCCH}$ denotes a quantity of PRBs occupied by the

37

PSCCH, $M_{\text{RB}}^{\text{PSSCH}}$ denotes a quantity of PRBs occupied by the PSSCH on the symbol comprising no PSCCH transmission.

13. The method according to claim 11 or 12, wherein if the first sidelink signal is a PSCCH, transmit power of the PSCCH satisfies:

$$P_{PSCCH}(i) = 10\log_{10}(\frac{M_{RB}^{PSCCH}}{M_{RB}^{PSSCH}}) + P_{PSSCH}(i),$$

wherein $M_{RB}^{PSCCH}$ denotes a quantity of PRBs occupied by the PSCCH, and $M_{\text{RB}}^{\text{PSSCH}}$ denotes a quantity of PRBs occupied by the PSSCH on the symbol comprising no PSCCH transmission.

14. The method according to any one of claims 11 to 13, wherein if it is not configured to perform power control for the PSSCH based on the downlink path loss, the fourth transmit power is determined based on one or more of following:

the first transmit power;
the second transmit power; or
the third transmit power.

15. The method according to claim 14, wherein the fourth transmit power satisfies:

$$P_{\text{PSSCH},D}(i) = \min(P_1, P_{\text{CMAX}}, P_{MAX\_CBR}).$$

16. The method according to any one of claims 11 to 13, wherein if it is configured to perform power control for the PSSCH based on the downlink path loss, the fourth transmit power satisfies:

$$P_{\text{PSSCH},D}(i) = P_{0,D} + 10\log_{10}(2^{\mu} \cdot M_{\text{RB}}^{\text{PSSCH}}) + \alpha_D \cdot PL_D,$$

wherein $P_{0,D}$ denotes a P0 value for power control based on the downlink path loss, $PL_D$ denotes the downlink path loss, $\alpha_D$ denotes an $\alpha$ value for power control based on the downlink path loss, $M_{\text{RB}}^{\text{PSSCH}}$ denotes a quantity of PRBs occupied by the PSSCH on the symbol comprising no PSCCH transmission, $\mu$ is determined based on a subcarrier spacing, and $P_{\text{PSSCH},D}(i)$ denotes the fourth transmit power.

17. The method according to any one of claims 11 to 16, wherein if it is not configured to perform power control for the PSSCH based on the sidelink path loss, the fifth transmit power is determined based on one or more of following:

the first transmit power;
the second transmit power;
the third transmit power; or
the fourth transmit power.

18. The method according to claim 17, wherein the fifth transmit power satisfies:

$$P_{\text{PSSCH},SL}(i) = \min(P_1, P_{\text{CMAX}}, P_{MAX\_CBR});$$

or

$$P_{\text{PSSCH},SL}(i) = \min(P_1, P_{\text{CMAX}}, P_{\text{PSSCH},D}(i)).$$

19. The method according to any one of claims 11 to 16, wherein if it is configured to perform power control for the PSSCH based on the sidelink path loss, the fifth transmit power satisfies:

$$P_{\text{PSSCH},SL}(i){=}P_{0,SL} + 10\log_{10}(2^{\mu} \cdot M_{\text{RB}}^{\text{PSSCH}}) + \alpha_{SL} \cdot PL_{SL},$$

wherein $P_{0,SL}$ denotes a P0 value for power control based on the sidelink path loss, $PL_{SL}$ denotes the sidelink path loss, $\alpha_{SL}$ denotes an α value for power control based on the sidelink path loss, $M_{\text{RB}}^{\text{PSSCH}}$ denotes a quantity of PRBs occupied by the PSSCH on the symbol comprising no PSCCH transmission, $\mu$ is determined based on a subcarrier spacing, and $P_{\text{PSSCH},SL}(i)$ denotes the fifth transmit power.

20. The method according to any one of claims 1 to 10, wherein if the first sidelink signal is a sidelink synchronization information block S-SSB, transmit power of the S-SSB satisfies:

$$P_{S-SSB}(i) = \min(P_1, P_{CMAX}, P_{S-SSB,D}(i) ),$$

wherein i denotes a transmission opportunity corresponding to the S-SSB, $P_{S-SSB}(i)$ denotes the transmit power of the S-SSB, $P_1$ denotes the first transmit power, $P_{CMAX}$ denotes the second transmit power, and $P_{S-SSB,D}(i)$ denotes the fourth transmit power.

21. The method according to claim 20, wherein if it is configured to perform power control for the S-SSB based on the downlink path loss, the fourth transmit power satisfies:

$$P_{S-SSB,D}(i) = P_{0,\text{S-SSB}} + 10\log_{10}(2^{u} \cdot M_{RB}^{\text{S-SSB}}) + \alpha_{\text{S-SSB}} \cdot PL,$$

wherein $P_{0,\text{S-SSB}}$ denotes a P0 value for power control for the S-SSB based on the downlink path loss, $PL$ denotes the downlink path loss, $\alpha_{\text{S-SSB}}$ denotes an α value for power control based on the downlink path loss, $M_{RB}^{\text{S-SSB}}$ is determined based on a quantity of PRBs occupied by the SSB, and $\mu$ is determined based on a subcarrier spacing.

22. The method according to claim 20, wherein if it is not configured to perform power control for the S-SSB based on the downlink path loss, the fourth transmit power satisfies:

$$P_{S-SSB,D}(i) = \min(P_1, P_{CMAX});$$

or

$$P_{S-SSB,D}(i) = P_{CMAX}.$$

23. The method according to any one of claims 1 to 10, wherein if the first sidelink signal is a physical sidelink feedback channel PSFCH corresponding to a first transmission opportunity, transmit power of the PSFCH is determined further based on one or more of following:

a quantity $N_1$, used to indicate a quantity of to-be-transmitted PSFCHs corresponding to the first transmission opportunity;
a quantity $N_2$, used to indicate a quantity of PSFCHs with successful channel access in the to-be-transmitted PSFCHs; or
a quantity $N_3$, used to indicate a maximum quantity of PSFCH transmissions supported by the terminal device.

24. The method according to claim 23, wherein if it is configured to perform power control for the first sidelink signal based on the downlink path loss, the fourth transmit power satisfies:

$$P_{\text{PSFCH,one}} = P_{O,PSFCH} + 10\,log_{10}\big(2^{\mu} \cdot M_{\text{RB}}^{\text{PSFCH,one}}\big) + \alpha_{PSFCH} \cdot PL,$$

wherein i denotes a transmission opportunity corresponding to the PSFCH, $P_{O,PSFCH}$ denotes a P0 value for power control for the PSFCH based on the downlink path loss, $PL$ denotes the downlink path loss, $\alpha_{PSFCH}$ denotes an α value for power control based on the downlink path loss, $M_{RB}^{PSFCH,one}$ is determined based on a quantity of PRBs occupied by one PSFCH, $\mu$ is determined based on a subcarrier spacing, and $P_{PSFCH,one}$ denotes the fourth transmit power.

25. The method according to claim 23 or 24, wherein in a case in which $N_4$ is less than or equal to $N_3$, a quantity $N_5$ of selected PSFCHs and transmit power of each PSFCH in the selected PSFCHs are determined based on a first condition, and the first condition comprises one or more of following:

assuming $N_4$ PSFCHs are each transmitted at the fourth transmit power, if total power of the $N_4$ PSFCHs is less than or equal to eighth transmit power, the quantity $N_5$ of selected PSFCHs is equal to $N_4$, and the transmit power of each PSFCH is equal to the fourth transmit power; or
assuming $N_4$ PSFCHs are each transmitted at the fourth transmit power, if total power of the $N_4$ PSFCHs is greater than the eighth transmit power, the quantity $N_5$ of selected PSFCHs is determined based on priorities of the $N_4$ PSFCHs, and the transmit power of each PSFCH is determined based on the fourth transmit power and/or ninth transmit power,
wherein $N_4$ is equal to $N_1$ or $N_2$, the eighth transmit power is determined based on the first transmit power and/or the second transmit power, and the ninth transmit power is an average transmit power obtained by evenly distributing the eighth transmit power among the selected $N_5$ PSFCHs.

26. The method according to claim 23 or 24, further comprising:

in a case in which $N_4$ is greater than $N_3$, determining, by the terminal device, $N_3$ PSFCHs based on ascending order of priority values of PSFCHs; and
determining, by the terminal device based on the $N_3$ PSFCHs, a quantity $N_5$ of selected PSFCHs and transmit power of each PSFCH in the selected PSFCHs,
wherein $N_4$ is equal to $N_1$ or $N_2$.

27. The method according to claim 26, wherein the quantity $N_5$ of selected PSFCHs and the transmit power of each PSFCH in the selected PSFCHs are determined based on a second condition, and the second condition comprises one or more of following:

assuming the $N_3$ PSFCHs are each transmitted at the fourth transmit power, if total power of the $N_3$ PSFCHs is less than or equal to eighth transmit power, the quantity $N_5$ of selected PSFCHs is equal to $N_3$, and the transmit power of each PSFCH is equal to the fourth transmit power; or
assuming the $N_3$ PSFCHs are each transmitted at the fourth transmit power, if total power of the $N_3$ PSFCHs is greater than the eighth transmit power, the quantity $N_5$ of selected PSFCHs is determined based on priorities of the $N_3$ PSFCHs, and the transmit power of each PSFCH is determined based on the fourth transmit power and/or ninth transmit power,
wherein the eighth transmit power is determined based on the first transmit power and/or the second transmit power, and the ninth transmit power is an average transmit power obtained by evenly distributing the eighth transmit power among the selected $N_5$ PSFCHs.

28. The method according to claim 23, further comprising:

if it is not configured to perform power control for the PSFCH based on the downlink path loss, selecting, by the terminal device, $N_5$ PSFCHs from $N_4$ PSFCHs based on ascending order of priority values of PSFCHs, wherein $N_4$ is equal to $N_1$ or $N_2$, transmit power of each PSFCH in the $N_5$ PSFCHs is determined based on ninth transmit power, the ninth transmit power is an average transmit power obtained by evenly distributing the eighth transmit power among the selected $N_5$ PSFCHs, and the eighth transmit power is determined based on the first transmit power and/or the second transmit power.

29. The method according to any one of claims 25 to 28, wherein if $N_4$ is equal to $N_1$, a quantity of actually transmitted PSFCHs corresponding to the first transmission opportunity is $N_6$, and a value of $N_6$ is determined based on a quantity of PSFCHs with successful channel access in the selected $N_5$ PSFCHs.

30. The method according to any one of claims 25 to 28, wherein if $N_4$ is equal to $N_2$, a quantity of actually transmitted PSFCHs corresponding to the first transmission opportunity is $N_5$.

31. A terminal device, comprising:

a determining module, configured to determine transmit power of a first sidelink signal in shared spectrum based on one or more of following:

first transmit power, determined based on a power limit;
second transmit power, determined based on a maximum transmit power of the terminal device;
third transmit power, determined based on a sidelink priority and/or a channel busy ratio;
fourth transmit power, determined based on a downlink path loss or the second transmit power; or
fifth transmit power, determined based on a sidelink path loss or the second transmit power.

32. The terminal device according to claim 31, wherein the power limit comprises one or more of following:

a mean equivalent isotropically radiated power density limit; or
a mean equivalent isotropically radiated power limit.

33. The terminal device according to claim 31 or 32, wherein the first transmit power comprises one or more of following:

sixth transmit power, determined based on a mean equivalent isotropically radiated power density limit; or
seventh transmit power, determined based on a mean equivalent isotropically radiated power limit.

34. The terminal device according to claim 33, wherein the sixth transmit power is further determined based on one or more of following:

a frequency domain resource corresponding to the first sidelink signal in a unit frequency range;
a quantity of physical resource blocks PRBs comprised in the first sidelink signal;
a quantity of subcarriers comprised in one PRB; or
a subcarrier spacing of a frequency resource corresponding to the first sidelink signal.

35. The terminal device according to claim 34, wherein the sixth transmit power determined based on the frequency domain resource corresponding to the first sidelink signal in the unit frequency range comprises: the sixth transmit power determined based on a maximum value of a frequency domain resource occupied by the first sidelink signal in the unit frequency range.

36. The terminal device according to claim 34 or 35, wherein the unit frequency range corresponds to a frequency range of 1 MHz.

37. The terminal device according to any one of claims 34 to 36, wherein the unit frequency range is any unit frequency range within a frequency domain resource corresponding to the first sidelink signal.

38. The terminal device according to any one of claims 34 to 37, wherein the the sixth transmit power satisfies:

$$P_6 = \mathrm{Y} - 10log_{10}(BW) + 10log_{10}(M_{RB} \cdot N_{RB}^{SC} \cdot \Delta f),$$

wherein Y denotes the mean equivalent isotropically radiated power density limit, $BW$ denotes the frequency domain resource corresponding to the first sidelink signal in the unit frequency range, $M_{RB}$ denotes the quantity of PRBs comprised in the first sidelink signal, $N_{RB}^{SC}$ denotes the quantity of subcarriers comprised in one PRB, and $\Delta f$ denotes the subcarrier spacing of the frequency resource corresponding to the first sidelink signal.

39. The terminal device according to any one of claims 33 to 38, wherein the seventh transmit power is less than or equal to transmit power indicated by the mean equivalent isotropically radiated power limit.

40. The terminal device according to any one of claims 31 to 39, wherein the transmit power of the first sidelink signal is determined based on a minimum value of one or more of following: the first transmit power, the second transmit power, the third transmit power, the fourth transmit power, or the fifth transmit power.

41. The terminal device according to any one of claims 31 to 40, wherein if the first sidelink signal is a physical sidelink shared channel PSSCH, transmit power of the PSSCH on a symbol comprising no physical sidelink control channel PSCCH transmission satisfies:

$$P_{PSSCH}(i) = \min\left(P_1, P_{\mathrm{CMAX}}, P_{MAX\_CBR}, \min\left(P_{PSSCH,D}(i), P_{PSSCH,SL}(i)\right)\right),$$

wherein i denotes a transmission opportunity corresponding to the PSSCH, $P_{PSSCH}(i)$ denotes the transmit power of the PSSCH on the symbol comprising no PSCCH transmission, $P_1$ denotes the first transmit power, $P_{\mathrm{CMAX}}$ denotes the second transmit power, $P_{MAX\_CBR}$ denotes the third transmit power, $P_{PSSCH,D}(i)$ denotes the fourth transmit power, and $P_{PSSCH,SL}(i)$ denotes the fifth transmit power.

42. The terminal device according to claim 41, wherein transmit power of the PSSCH on a symbol comprising PSCCH transmission satisfies:

$$P_{PSSCH2}(i) = 10\log_{10}\left(\frac{M_{RB}^{PSSCH} - M_{RB}^{PSCCH}}{M_{RB}^{PSSCH}}\right) + P_{PSSCH}(i),$$

wherein i denotes a transmission opportunity corresponding to the PSSCH, $P_{PSSCH2}(i)$ denotes the transmit power of the PSSCH on the symbol comprising PSCCH transmission, $M_{RB}^{PSCCH}$ denotes a quantity of PRBs occupied by the PSCCH, $M_{RB}^{PSSCH}$ denotes a quantity of PRBs occupied by the PSSCH on the symbol comprising no PSCCH transmission.

43. The terminal device according to claim 41 or 42, wherein if the first sidelink signal is a PSCCH, transmit power of the PSCCH satisfies:

$$P_{PSCCH}(i) = 10\log_{10}\left(\frac{M_{RB}^{PSCCH}}{M_{RB}^{PSSCH}}\right) + P_{PSSCH}(i),$$

wherein $M_{RB}^{PSCCH}$ denotes a quantity of PRBs occupied by the PSCCH, and $M_{RB}^{PSSCH}$ denotes a quantity of PRBs occupied by the PSSCH on the symbol comprising no PSCCH transmission.

44. The terminal device according to any one of claims 41 to 43, wherein if it is not configured to perform power control for the PSSCH based on the downlink path loss, the fourth transmit power is determined based on one or more of following:

    the first transmit power;
    the second transmit power; or
    the third transmit power.

45. The terminal device according to claim 44, wherein the fourth transmit power satisfies:

$$P_{\mathrm{PSSCH},D}(i) = \min(P_1, P_{\mathrm{CMAX}}, P_{MAX\_CBR}).$$

46. The terminal device according to any one of claims 41 to 43, wherein if it is configured to perform power control for the PSSCH based on the downlink path loss, the fourth transmit power satisfies:

$$P_{\mathrm{PSSCH},D}(i) = P_{0,D} + 10\log_{10}(2^{\mu} \cdot M_{RB}^{\mathrm{PSSCH}}) + \alpha_D \cdot PL_D,$$

wherein $P_{0,D}$ denotes a P0 value for power control based on the downlink path loss, $PL_D$ denotes the downlink path loss, $\alpha_D$ denotes an $\alpha$ value for power control based on the downlink path loss, $M_{RB}^{\mathrm{PSSCH}}$ denotes a quantity of PRBs occupied by the PSSCH on the symbol comprising no PSCCH transmission, $\mu$ is determined based on a subcarrier spacing, and $P_{\text{PSSCH},D}(i)$ denotes the fourth transmit power.

47. The terminal device according to any one of claims 41 to 46, wherein if it is not configured to perform power control for the PSSCH based on the sidelink path loss, the fifth transmit power is determined based on one or more of following:

> the first transmit power;
> the second transmit power;
> the third transmit power; or
> the fourth transmit power.

48. The terminal device according to claim 47, wherein the fifth transmit power satisfies:

$$P_{\text{PSSCH},SL}(i) = \min(P_1, P_{\text{CMAX}}, P_{MAX\_CBR});$$

or

$$P_{\text{PSSCH},SL}(i) = \min(P_1, P_{\text{CMAX}}, P_{\text{PSSCH},D}(i)).$$

49. The terminal device according to any one of claims 41 to 46, wherein if it is configured to perform power control for the PSSCH based on the sidelink path loss, the fifth transmit power satisfies:

$$P_{\text{PSSCH},SL}(i) = P_{0,SL} + 10\log_{10}(2^{\mu} \cdot M_{\text{RB}}^{\text{PSSCH}}) + \alpha_{SL} \cdot PL_{SL},$$

wherein $P_{0,SL}$ denotes a P0 value for power control based on the sidelink path loss, $PL_{SL}$ denotes the sidelink path loss, $\alpha_{SL}$ denotes an $\alpha$ value for power control based on the sidelink path loss, $M_{\text{RB}}^{\text{PSSCH}}$ denotes a quantity of PRBs occupied by the PSSCH on the symbol comprising no PSCCH transmission, $\mu$ is determined based on a subcarrier spacing, and $P_{\text{PSSCH},SL}(i)$ denotes the fifth transmit power.

50. The terminal device according to any one of claims 31 to 40, wherein if the first sidelink signal is a sidelink synchronization information block S-SSB, transmit power of the S-SSB satisfies:

$$P_{S-SSB}(i) = \min(P_1, P_{CMAX}, P_{S-SSB,D}(i)),$$

wherein i denotes a transmission opportunity corresponding to the S-SSB, $P_{S-SSB}(i)$ denotes the transmit power of the S-SSB, $P_1$ denotes the first transmit power, $P_{\text{CMAX}}$ denotes the second transmit power, and $P_{S-SSB,D}(i)$ denotes the fourth transmit power.

51. The terminal device according to claim 50, wherein if it is configured to perform power control for the S-SSB based on the downlink path loss, the fourth transmit power satisfies:

$$P_{S-SSB,D}(i) = P_{0,\text{S-SSB}} + 10\log_{10}(2^u \cdot M_{RB}^{\text{S-SSB}}) + \alpha_{\text{S-SSB}} \cdot PL,$$

wherein $P_{0,\text{S-SSB}}$ denotes a P0 value for power control for the S-SSB based on the downlink path loss, $PL$ denotes the downlink path loss, $\alpha_{\text{S-SSB}}$ denotes an $\alpha$ value for power control based on the downlink path loss, $M_{RB}^{\text{S-SSB}}$ is determined based on a quantity of PRBs occupied by the SSB, and $\mu$ is determined based on a subcarrier spacing.

52. The terminal device according to claim 50, wherein if it is not configured to perform power control for the S-SSB based on the downlink path loss, the fourth transmit power satisfies:

$$P_{S-SSB,D}(i) = \min(P_1, P_{CMAX}),$$

or

$$P_{S-SSB,D}(i) = P_{CMAX}.$$

53. The terminal device according to any one of claims 31 to 40, wherein if the first sidelink signal is a physical sidelink feedback channel PSFCH corresponding to a first transmission opportunity, transmit power of the PSFCH is determined based on one or more of following:

a quantity $N_1$, used to indicate a quantity of to-be-transmitted PSFCHs corresponding to the first transmission opportunity;
a quantity $N_2$, used to indicate a quantity of PSFCHs with successful channel access in the to-be-transmitted PSFCHs; or
a quantity $N_3$, used to indicate a maximum quantity of PSFCH transmissions supported by the terminal device.

54. The terminal device according to claim 53, wherein if it is configured to perform power control for the first sidelink signal based on the downlink path loss, the fourth transmit power satisfies:

$$P_{\mathrm{PSFCH,one}} = P_{O,PSFCH} + 10\,log_{10}\big(2^{\mu} \cdot M_{\mathrm{RB}}^{\mathrm{PSFCH,one}}\big) + \alpha_{PSFCH} \cdot PL,$$

wherein i denotes a transmission opportunity corresponding to the PSFCH, $P_{O,PSFCH}$ denotes a P0 value for power control for the PSFCH based on the downlink path loss, $PL$ denotes the downlink path loss, $\alpha_{PSFCH}$ denotes an α value for power control based on the downlink path loss, $M_{\mathrm{RB}}^{\mathrm{PSFCH,one}}$ is determined based on a quantity of PRBs occupied by one PSFCH, $\mu$ is determined based on a subcarrier spacing, and $P_{\mathrm{PSFCH,one}}$ denotes the fourth transmit power.

55. The terminal device according to claim 53 or 54, wherein in a case in which $N_4$ is less than or equal to $N_3$, a quantity $N_5$ of selected PSFCHs and transmit power of each PSFCH in the selected PSFCHs are determined based on a first condition, and the first condition comprises one or more of following:

assuming $N_4$ PSFCHs are each transmitted at the fourth transmit power, if total power of the $N_4$ PSFCHs is less than or equal to eighth transmit power, the quantity $N_5$ of selected PSFCHs is equal to $N_4$, and the transmit power of each PSFCH is equal to the fourth transmit power; or
assuming the $N_4$ PSFCHs are each transmitted at the fourth transmit power, if total power of the $N_4$ PSFCHs is greater than the eighth transmit power, the quantity $N_5$ of selected PSFCHs is determined based on priorities of the $N_4$ PSFCHs, and the transmit power of each PSFCH is determined based on the fourth transmit power and/or ninth transmit power,
wherein $N_4$ is equal to $N_1$ or $N_2$, the eighth transmit power is determined based on the first transmit power and/or the second transmit power, and the ninth transmit power is an average transmit power obtained by evenly distributing the eighth transmit power among the selected $N_5$ PSFCHs.

56. The terminal device according to claim 53 or 54, wherein the determining module is further configured to:

in a case in which $N_4$ is greater than $N_3$, determine $N_3$ PSFCHs based on ascending order of priority values of PSFCHs; and
determine, based on the $N_3$ PSFCHs, a quantity $N_5$ of selected PSFCHs and transmit power of each PSFCH in the selected PSFCHs,
wherein $N_4$ is equal to $N_1$ or $N_2$.

57. The terminal device according to claim 56, wherein the quantity $N_5$ of selected PSFCHs and the transmit power of each PSFCH in the selected PSFCHs are determined based on a second condition, and the second condition comprises one or more of following:

assuming the $N_3$ PSFCHs are each transmitted at the fourth transmit power, if total power of the $N_3$ PSFCHs is less than or equal to eighth transmit power, the quantity $N_5$ of selected PSFCHs is equal to $N_3$, and the transmit power of each PSFCH is equal to the fourth transmit power; or
assuming the $N_3$ PSFCHs are each transmitted at the fourth transmit power, if total power of the $N_3$ PSFCHs is

greater than the eighth transmit power, the quantity $N_5$ of selected PSFCHs is determined based on priorities of the $N_3$ PSFCHs, and the transmit power of each PSFCH is determined based on the fourth transmit power and/or ninth transmit power,

wherein the eighth transmit power is determined based on the first transmit power and/or the second transmit power, and the ninth transmit power is an average transmit power obtained by evenly distributing the eighth transmit power among the selected $N_5$ PSFCHs.

58. The terminal device according to claim 53, further comprising:

a selection module, configured to: if it is not configured to perform power control for the PSFCH based on the downlink path loss, select $N_5$ PSFCHs from $N_4$ PSFCHs based on ascending order of priority values of PSFCHs, wherein $N_4$ is equal to $N_1$ or $N_2$, transmit power of each PSFCH in the $N_5$ PSFCHs is determined based on ninth transmit power, the ninth transmit power is an average transmit power obtained by evenly distributing the eighth transmit power among the selected $N_5$ PSFCHs, and the eighth transmit power is determined based on the first transmit power and/or the second transmit power.

59. The terminal device according to any one of claims 55 to 58, wherein if $N_4$ is equal to $N_1$, a quantity of actually transmitted PSFCHs corresponding to the first transmission opportunity is $N_6$, and a value of $N_6$ is determined based on a quantity of PSFCHs with successful channel access in the selected $N_5$ PSFCHs.

60. The terminal device according to any one of claims 55 to 58, wherein if $N_4$ is equal to $N_2$, a quantity of actually transmitted PSFCHs corresponding to the first transmission opportunity is $N_5$.

61. A terminal device, comprising a transceiver, a memory, and a processor, wherein the memory is configured to store a program, and the processor is configured to invoke the program in the memory and control the transceiver to receive or transmit a signal, to cause the terminal device to execute the method according to any one of claims 1 to 30.

62. An apparatus, comprising a processor configured to invoke a program from a memory, to cause the apparatus to execute the method according to any one of claims 1 to 30.

63. A chip, comprising a processor, configured to invoke a program from a memory to cause a device installed with the chip to execute the method according to any one of claims 1 to 30.

64. A computer-readable storage medium, wherein the computer-readable storage medium stores a program, and the program causes a computer to execute the method according to any one of claims 1 to 30.

65. A computer program product, comprising a program, wherein the program causes a computer to execute the method according to any one of claims 1 to 30.

66. A computer program, wherein the computer program causes a computer to execute the method according to any one of claims 1 to 30.

FIG. 1

Sidelink communication

FIG. 2

110

120a    120b

Sidelink
communication

FIG. 3

120b    120b

Sidelink
communication

FIG. 4

**Communication cluster**

Terminal
device 2

Terminal
device 3

FIG. 5

Terminal
device 2

Terminal
device 6

Terminal
device 1

Terminal
device 3

Terminal
device 5

Terminal
device 4

FIG. 6

Terminal device 1

Terminal device 2

Sidelink data

FIG. 7

**Communication
cluster**

FIG. 8

FIG. 9A

FIG. 9B

Channel occupancy time

LBT is successful

Time domain

FIG. 10

PRB

Interlace 1    Interlace 2

FIG. 11

60MHz carrier bandwidth

| 20MHz | | 20MHz | | 20MHz |
|---|---|---|---|---|
| LBT sub-band 1 | Guard band | LBT sub-band 2 | Guard band | LBT sub-band 3 |

FIG. 12

Resource block

Common resource block reference

Resource block set 1

Starting point of a guard band 1

Resource block set 2

Starting point of a guard band 2

Resource block set 3

Starting point of a carrier bandwidth

Length of a guard band 1

Length of a guard band 2

Endpoint of the carrier bandwidth

BWP starting point

BWP end point

FIG. 13

A terminal device determines transmit power of a first sidelink signal — 1410

FIG. 14

RB set 0

1.8 MHz

1.8 MHz

| 0 | 1 | 2 | 3 | 4 | 0 | 1 | 2 | 3 | 4 | 0 | 1 | 2 | 3 | 4 | ······ | 0 | 1 | 2 | 3 | 4 |

360 kHz

PRB occupied by the PSSCH          PRB not occupied

FIG. 15

FIG. 16

FIG. 17

FIG. 18

## INTERNATIONAL SEARCH REPORT

International application No.

**PCT/CN2022/130060**

### A. CLASSIFICATION OF SUBJECT MATTER

H04W52/24(2009.01)i; H04W52/18(2009.01)i

According to International Patent Classification (IPC) or to both national classification and IPC

### B. FIELDS SEARCHED

Minimum documentation searched (classification system followed by classification symbols)

IPC: H04W H04L

Documentation searched other than minimum documentation to the extent that such documents are included in the fields searched

Electronic data base consulted during the international search (name of data base and, where practicable, search terms used)

VEN, CNTXT, ENTXT, CNKI, 3GPP: 侧, 副, 直, 旁, 路, 频谱, 功率, 控制, 限制, 未, 非, 授权, 许可, 共享, side, sidelink, sl, power, spectrum, control, limit, unlicensed, shar+

### C. DOCUMENTS CONSIDERED TO BE RELEVANT

| Category* | Citation of document, with indication, where appropriate, of the relevant passages | Relevant to claim No. |
|---|---|---|
| Y | CN 112512128 A (HUAWEI TECHNOLOGIES CO., LTD.) 16 March 2021 (2021-03-16) description, paragraphs 0056-0062, 0130 and 0146 | 1-66 |
| Y | CN 112839374 A (BEIJING SAMSUNG TELECOM R&D CENTER; SAMSUNG ELECTRONICS CO., LTD.) 25 May 2021 (2021-05-25) description, paragraphs 0006-0043 and 0212-0216 | 1-66 |
| Y | CN 112399540 A (BEIJING SAMSUNG TELECOM R&D CENTER; SAMSUNG ELECTRONICS CO., LTD.) 23 February 2021 (2021-02-23) description, paragraphs 0042-0080 | 1-66 |
| Y | CN 114339795 A (VIVO COMMUNICATION TECHNOLOGY CO., LTD.) 12 April 2022 (2022-04-12) description, paragraphs 0004-0013 | 1-66 |
| Y | CN 113302990 A (HUAWEI TECHNOLOGIES CO., LTD.) 24 August 2021 (2021-08-24) description, paragraphs 0002-0026 | 1-66 |

☐ Further documents are listed in the continuation of Box C.  ☑ See patent family annex.

| | | |
|---|---|---|
| * Special categories of cited documents: | "T" | later document published after the international filing date or priority date and not in conflict with the application but cited to understand the principle or theory underlying the invention |
| "A" document defining the general state of the art which is not considered to be of particular relevance | | |
| "D" document cited by the applicant in the international application | "X" | document of particular relevance; the claimed invention cannot be considered novel or cannot be considered to involve an inventive step when the document is taken alone |
| "E" earlier application or patent but published on or after the international filing date | | |
| "L" document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" | document member of the same patent family |
| "P" document published prior to the international filing date but later than the priority date claimed | | |

| Date of the actual completion of the international search | Date of mailing of the international search report |
|---|---|
| **20 June 2023** | **21 June 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
|---|
| **PCT/CN2022/130060** |

| Patent document cited in search report | | | Publication date (day/month/year) | Patent family member(s) | | | Publication date (day/month/year) |
|---|---|---|---|---|---|---|---|
| CN | 112512128 | A | 16 March 2021 | US | 2018176955 | A1 | 21 June 2018 |
| | | | | US | 10390379 | B2 | 20 August 2019 |
| | | | | EP | 3793307 | A1 | 17 March 2021 |
| | | | | EP | 3793307 | B1 | 10 May 2023 |
| | | | | US | 2020084812 | A1 | 12 March 2020 |
| | | | | US | 11483884 | B2 | 25 October 2022 |
| | | | | WO | 2018113678 | A1 | 28 June 2018 |
| | | | | EP | 3549360 | A1 | 09 October 2019 |
| | | | | EP | 3549360 | A4 | 04 December 2019 |
| | | | | EP | 3549360 | B1 | 25 November 2020 |
| CN | 112839374 | A | 25 May 2021 | None | | | |
| CN | 112399540 | A | 23 February 2021 | None | | | |
| CN | 114339795 | A | 12 April 2022 | None | | | |
| CN | 113302990 | A | 24 August 2021 | US | 2022078721 | A1 | 10 March 2022 |
| | | | | WO | 2020143835 | A1 | 16 July 2020 |
| | | | | KR | 20210096260 | A | 04 August 2021 |
| | | | | EP | 3890409 | A1 | 06 October 2021 |
| | | | | EP | 3890409 | A4 | 12 January 2022 |
| | | | | JP | 2022517076 | A | 04 March 2022 |
| | | | | JP | 7259049 | B2 | 17 April 2023 |

Form PCT/ISA/210 (patent family annex) (July 2022)